# EUROPEAN PATENT APPLICATION

(11) **EP 4 848 678 A1**
(43) Date of publication of application: **02.12.2026**
(21) Application number: 25751104.8
(22) Date of filing: 15.01.2025
(51) Int. Cl.: H04L 27/26, H04L 5/00

(54) **SIGNAL TRANSMISSION METHOD AND APPARATUS**

(30) Priority: 08.02.2024 CN 202410178033
(71) Applicant: Huawei Technologies Co., Ltd., Shenzhen, Guangdong 518129 (CN)
(72) Inventor: WEI, Xiuhong, Shenzhen, Guangdong 518129 (CN); LI, Xueru, Shenzhen, Guangdong 518129 (CN)
(74) Representative: Huawei European IPR
(86) International application number: PCT/CN2025/072587
(87) International publication number: WO 2025/167502

(57) **Abstract**

This application provides a signal transmission method and an apparatus, and relates to the field of communication technologies. The method includes: determining a first reference signal, and sending the first reference signal. The first reference signal is obtained based on a first sequence and a first cyclic shift list; the first sequence is one sequence in a plurality of first sequences included in a first sequence set; and any first sequence in the first sequence set has a corresponding first cyclic shift list, and different first sequences correspond to different first cyclic shift lists. According to the foregoing solution, an amplitude peak of a cross-correlation sidelobe between the first reference signal and a reference signal (for example, a third reference signal) obtained based on another sequence in the first sequence set other than the first sequence used to determine the first reference signal can be reduced, so that interference of the another reference signal to the first reference signal can be reduced when the first reference signal is received.

## Description

This application claims priority to Chinese Patent Application No. 202410178033.9, filed with the China National Intellectual Property Administration on February 8, 2024 and entitled "SIGNAL TRANSMISSION METHOD AND APPARATUS", which is incorporated herein by reference in its entirety.

### TECHNICAL FIELD

This application relates to the field of communication technologies, and in particular, to a signal transmission method and an apparatus.

### BACKGROUND

In a sensing scenario, a transmitting end sends a reference signal to an ambient environment, and a receiving end may sense the ambient environment by comparing the original reference signal with a reference signal received after reflection by the ambient environment, to achieve an objective like positioning or tracking a target in the environment. The reference signal is generated based on a sequence (for example, an M sequence or a Gold sequence). For example, a reference signal whose length is an integer multiple of a sequence length may be obtained by cyclically extending a sequence. In the sensing scenario, to reduce interference between reference signals, a lower cross-correlation between different reference signals is required. However, the foregoing manner of obtaining the reference signal cannot meet a requirement of the cross-correlation between the different reference signals in the sensing scenario.

### SUMMARY

This application provides a signal transmission method and an apparatus, to reduce a cross-correlation between different reference signals, thereby reducing interference between the different reference signals.

To achieve the foregoing objective, this application uses the following technical solutions.

According to a first aspect, a signal transmission method is provided, and the method may be performed by a sending apparatus. The sending apparatus herein may be the sending apparatus itself, or may be a processor, a module, a logical node, a chip, a chip system, or the like that implements the method in the sending apparatus. For example, the sending apparatus may be a radio access network node or a terminal.

The method includes: determining a first reference signal, and sending the first reference signal. The first reference signal is obtained based on a first sequence and a first cyclic shift list; the first reference signal includes P elements; the first sequence is one sequence in a plurality of first sequences included in a first sequence set; the first sequence includes L elements; any first sequence in the first sequence set has a corresponding first cyclic shift list, and different first sequences correspond to different first cyclic shift lists; the first cyclic shift list includes R first cyclic shifts; and R is equal to an integer obtained by rounding P divided by L, and L, R, and P are all integers greater than or equal to 2.

According to the method provided in the first aspect, an amplitude peak of a cross-correlation sidelobe between the first reference signal and a reference signal (for example, a third reference signal) obtained based on another sequence in the first sequence set other than the first sequence used to determine the first reference signal can be reduced, so that interference of the another reference signal to the first reference signal is reduced when an apparatus (for example, a receiving apparatus) that receives the first reference signal receives the first reference signal.

In a possible implementation, the method further includes: sending a second reference signal, where the second reference signal is determined based on a second sequence and a second cyclic shift list; the second reference signal includes P elements; the second sequence is a sequence corresponding to the first sequence; the second sequence is one sequence in a plurality of second sequences included in a second sequence set, and the second sequence includes L elements; any second sequence in the second sequence set has a corresponding second cyclic shift list, and different second sequences correspond to different second cyclic shift lists; the second cyclic shift list includes R second cyclic shifts; and the first sequence set is associated with the second sequence set, and each first sequence in the first sequence set has a corresponding second sequence in the second sequence set.

Based on the foregoing possible implementation, the first reference signal and the second reference signal may be jointly processed to achieve a better correlation characteristic than that of a single reference signal (for example, the first reference signal), so that interference of another reference signal to a signal received by the receiving apparatus may be further reduced when an apparatus (for example, the receiving apparatus) that receives the first reference signal and the second reference signal receives the first reference signal and the second reference signal. The better correlation characteristic may be understood as that energy of an auto-correlation sidelobe and/or a cross-correlation sidelobe is lower.

In a possible implementation, the second cyclic shift list is the same as the first cyclic shift list.

Based on the foregoing possible implementation, for a same cyclic shift index, the first cyclic shift and the second cyclic shift may be equal. This can reduce implementation complexity, thereby reducing overheads for configuring the first reference signal and the second reference signal. In addition, this helps reduce interference of the another reference signal to the first reference signal and the second reference signal.

In a possible implementation, any two first sequences in the first sequence set have a corresponding first cyclic shift difference list; the first cyclic shift difference list includes a plurality of first cyclic shift differences; any two differences in the plurality of first cyclic shift differences are different; and the first cyclic shift difference is a difference between first cyclic shifts corresponding to the two first sequences. The first cyclic shift difference list may be understood as a list including differences between first cyclic shifts corresponding to a same index in two first cyclic shift lists corresponding to two first sequences.

Based on the foregoing possible implementation, when any two differences in first cyclic shift difference lists corresponding to two first sequences in the first sequence set are different, a cross-correlation between two reference signals respectively generated based on the two first sequences and the two corresponding first cyclic shift lists may be greatly reduced.

In a possible implementation, when R is greater than or equal to 3, in the R first cyclic shifts included in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

Based on the foregoing possible implementation, that the difference between the (i+1)^{th} first cyclic shift and the i^{th} first cyclic shift is equal to the difference between the i^{th} first cyclic shift and the (i-1)^{th} first cyclic shift may be understood as that the R first cyclic shifts form an arithmetic sequence. The difference may be understood as a tolerance of the cyclic shift list. By ensuring that tolerances of cyclic shift lists corresponding to different first sequences are different, it is easy to make the different first sequences correspond to the different first cyclic shift lists. This achieves an objective of a low cross-correlation between the different reference signals generated based on the different cyclic shift lists according to the foregoing method. In addition, this may reduce implementation complexity, thereby reducing overheads for configuring the first reference signal.

In a possible implementation, in the R first cyclic shifts included in the first cyclic shift list, a 1^{st} cyclic shift is equal to 0, an n^{th} first cyclic shift is n-1 times a 2^{nd} first cyclic shift, and n is any integer greater than 1 and less than or equal to R.

Based on the foregoing possible implementation, by ensuring that 2^{nd} cyclic shifts of cyclic shift lists corresponding to different first sequences are different, it can be easy to make the different first sequences correspond to the different first cyclic shift lists. This not only reduces a cross-correlation between the different reference signals generated based on the different cyclic shift lists, but also may reduce implementation complexity, thereby reducing overheads for configuring the first reference signal.

In a possible implementation, in the R first cyclic shifts included in the first cyclic shift list, an m^{th} first cyclic shift is m times a 1^{st} first cyclic shift, and m is any integer greater than 0 and less than or equal to R.

Based on the foregoing possible implementation, by ensuring that 1^{st} cyclic shifts of cyclic shift lists corresponding to different first sequences are different, it can be easy to make the different first sequences correspond to the different first cyclic shift lists. This not only reduces a cross-correlation between the different reference signals generated based on the different cyclic shift lists, but also may reduce implementation complexity, thereby reducing overheads for configuring the first reference signal.

In a possible implementation, the first cyclic shift is a quotient of a first offset and a first length; the first length is L, R times L, or P; and the first offset is an integer less than the first length.

Based on the foregoing possible implementation, according to different definitions of the first length, the first cyclic shift may be flexibly obtained based on different lengths L of the first sequence or different lengths P of the first reference signal.

In a possible implementation, any two first cyclic shifts in the first cyclic shift list are different.

Based on the foregoing possible implementation, obtaining the first reference signal when at least two first cyclic shifts in the first cyclic shift list are the same is equivalent to repeated extension of the sequence. In this case, an objective of a lower cross-correlation between the reference signal and another reference signal when a length of the reference signal increases cannot be achieved. Therefore, to further reduce the cross-correlation between the first reference signal and the another reference signal, the any two first cyclic shifts in the first cyclic shift list may be different.

In a possible implementation, a time domain resource for sending the first reference signal is different from a time domain resource for sending the second reference signal.

Based on the foregoing possible implementation, the first reference signal and the second reference signal are independently correlated and then jointly processed, so that correlation performance can be better. Therefore, reference signals of different channels may be transmitted on different time domain resources, so that the apparatus (for example, the receiving apparatus) that receives reference signals can better distinguish between the first reference signal and the second reference signal.

In a possible implementation, the method further includes: receiving first information, where the first information indicates an index of the first sequence; and determining the first sequence and the first cyclic shift list based on the first information.

Based on the foregoing possible implementation, the sending apparatus may determine the first reference signal based on the first sequence corresponding to the index of the first sequence indicated by the first information and the first cyclic shift list. For example, the first sequence and the first cyclic shift list may be determined in a table lookup manner based on the index of the first sequence.

In a possible implementation, the first cyclic shift list satisfies a first condition, the first condition includes that a cross-correlation between the first reference signal and the third reference signal is less than a first threshold, the third reference signal is obtained based on one first sequence in the first sequence set and a first cyclic shift list corresponding to the first sequence, and a first sequence used to determine the first reference signal is different from a first sequence used to determine the third reference signal.

Based on the foregoing possible implementation, the first reference signal generated based on the first sequence and the first cyclic shift list that satisfies the first condition may cause a cross-correlation between the first reference signal and a reference signal (for example, the third reference signal) generated based on a sequence other than the first sequence in the first sequence set to be less than the first threshold, so that interference between the first reference signal and the third reference signal is reduced, and the apparatus (for example, the receiving apparatus) that receives the first reference signal can better receive the first reference signal.

In a possible implementation, a (*p* + 1)^{th} element of the first reference signal is *sₚ*, and *p* is an integer greater than or equal to 0 and less than P; and *sₚ = xᵤ* × e^{j2π*αvu*}, where *xᵤ* is a (*u* + 1)^{th} element of the first sequence, *u* = *p* mod L, *αᵥ* is a (*v* + 1)^{th} first cyclic shift of the first cyclic shift list, $v = \left⌊p/L\right⌋$, mod represents a remainder or modulo operation, and └ ┘ represents rounding down. It may be understood that the foregoing descriptions of "a (*p* + 1)^{th} element of the first reference signal is *sₚ*" is based on a premise that "*s*₀ is a 1^{st} element of the first reference signal". When "*s*₀ is a 0^{th} element of the first reference signal" is used as a premise, *sₚ* is a *p*^{th} element of the first reference signal.

Based on the foregoing possible implementation, the first reference signal generated based on *sₚ* = *xᵤ* × e^{j2π*αvu*}(0 ≤ *p < P*) is a non-repeated extension of the first sequence, which helps improve a correlation characteristic of the reference signal.

In a possible implementation, the first reference signal is used for sensing.

Based on the foregoing possible implementation, when the first reference signal is used for sensing, the cross-correlation between the reference signal (for example, the first reference signal) generated according to the foregoing method and the another reference signal is greatly reduced, that is, interference between the reference signals is effectively reduced. Therefore, in a sensing scenario, when different sending apparatuses and apparatuses (for example, the receiving apparatus) that receive the first reference signal transmit reference signals, interference may be greatly reduced, thereby helping a receiving end of the reference signal better process the signal.

In a possible implementation, the first sequence and the second sequence are a multi-channel sequence.

Based on the foregoing possible implementation, a multi-channel reference signal may be obtained based on the first sequence and the second sequence, and cross-correlation sidelobes of channels in the multi-channel sequence may partially cancel each other out, to achieve a better correlation characteristic than that of a sequence of a single channel, that is, a cross-correlation between the multi-channel sequence and another multi-channel sequence may be reduced, thereby reducing interference between the reference signals.

According to a second aspect, a signal transmission method is provided, and the method may be performed by a receiving apparatus. The receiving apparatus herein may be the receiving apparatus itself, or may be a processor, a module, a logical node, a chip, a chip system, or the like that implements the method in the receiving apparatus. For example, the receiving apparatus may be a radio access network node or a terminal.

The method includes: receiving a first reference signal. The first reference signal is obtained based on a first sequence and a first cyclic shift list; the first reference signal includes P elements; the first sequence is one sequence in a plurality of first sequences included in a first sequence set; the first sequence includes L elements; any first sequence in the first sequence set has a corresponding first cyclic shift list, and different first sequences correspond to different first cyclic shift lists; the first cyclic shift list includes R first cyclic shifts; and R is equal to an integer obtained by rounding P divided by L, and L, R, and P are all integers greater than or equal to 2.

According to the method provided in the second aspect, an amplitude peak of a cross-correlation sidelobe between the first reference signal and a reference signal (for example, a third reference signal) obtained based on another sequence in the first sequence set other than the first sequence used to determine the first reference signal can be reduced, so that interference of the another reference signal to the first reference signal is reduced when the receiving apparatus receives the first reference signal.

In a possible implementation, the method further includes: receiving a second reference signal, where the second reference signal is determined based on a second sequence and a second cyclic shift list; the second reference signal includes P elements; the second sequence is a sequence corresponding to the first sequence; the second sequence is one sequence in a plurality of second sequences included in a second sequence set, and the second sequence includes L elements; any second sequence in the second sequence set has a corresponding second cyclic shift list, and different second sequences correspond to different second cyclic shift lists; the second cyclic shift list includes R second cyclic shifts; and the first sequence set is associated with the second sequence set, and each first sequence in the first sequence set has a corresponding second sequence in the second sequence set.

Based on the foregoing possible implementation, the first reference signal and the second reference signal may be jointly processed to achieve a better correlation characteristic than that of a single reference signal (for example, the first reference signal), so that interference of another reference signal to a signal received by the receiving apparatus may be further reduced when the receiving apparatus receives the first reference signal and the second reference signal. The better correlation characteristic may be understood as that energy of an auto-correlation sidelobe and/or a cross-correlation sidelobe is lower.

In a possible implementation, the second cyclic shift list is the same as the first cyclic shift list.

Based on the foregoing possible implementation, for a same cyclic shift index, the first cyclic shift and the second cyclic shift may be equal. This can reduce implementation complexity, thereby reducing overheads for configuring the first reference signal and the second reference signal. In addition, this helps reduce interference of the another reference signal to the first reference signal and the second reference signal.

In a possible implementation, any two first sequences in the first sequence set have a corresponding first cyclic shift difference list; the first cyclic shift difference list includes a plurality of first cyclic shift differences; any two differences in the plurality of first cyclic shift differences are different; and the first cyclic shift difference is a difference between first cyclic shifts corresponding to the two first sequences. The first cyclic shift difference list may be understood as a list including differences between first cyclic shifts corresponding to a same index in two first cyclic shift lists corresponding to two first sequences.

Based on the foregoing possible implementation, when any two differences in first cyclic shift difference lists corresponding to two first sequences in the first sequence set are different, a cross-correlation between two reference signals respectively generated based on the two first sequences and the two corresponding first cyclic shift lists may be greatly reduced.

In a possible implementation, when R is greater than or equal to 3, in the R first cyclic shifts included in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

Based on the foregoing possible implementation, that the difference between the (i+1)^{th} first cyclic shift and the i^{th} first cyclic shift is equal to the difference between the i^{th} first cyclic shift and the (i-1)^{th} first cyclic shift may be understood as that the R first cyclic shifts form an arithmetic sequence. The difference may be understood as a tolerance of the cyclic shift list. By ensuring that tolerances of cyclic shift lists corresponding to different first sequences are different, it is easy to make the different first sequences correspond to the different first cyclic shift lists. This achieves an objective of a low cross-correlation between the different reference signals generated based on the different cyclic shift lists according to the foregoing method. In addition, this may reduce implementation complexity, thereby reducing overheads for configuring the first reference signal.

In a possible implementation, in the R first cyclic shifts included in the first cyclic shift list, a 1^{st} cyclic shift is equal to 0, an n^{th} first cyclic shift is n-1 times a 2^{nd} first cyclic shift, and n is any integer greater than 1 and less than or equal to R.

Based on the foregoing possible implementation, by ensuring that 2^{nd} cyclic shifts of cyclic shift lists corresponding to different first sequences are different, it can be easy to make the different first sequences correspond to the different first cyclic shift lists. This not only reduces a cross-correlation between the different reference signals generated based on the different cyclic shift lists, but also may reduce implementation complexity, thereby reducing overheads for configuring the first reference signal.

In a possible implementation, in the R first cyclic shifts included in the first cyclic shift list, an m^{th} first cyclic shift is m times a 1^{st} first cyclic shift, and m is any integer greater than 0 and less than or equal to R.

Based on the foregoing possible implementation, by ensuring that 1^{st} cyclic shifts of cyclic shift lists corresponding to different first sequences are different, it can be easy to make the different first sequences correspond to the different first cyclic shift lists. This not only reduces a cross-correlation between the different reference signals generated based on the different cyclic shift lists, but also may reduce implementation complexity, thereby reducing overheads for configuring the first reference signal.

In a possible implementation, the first cyclic shift is a quotient of a first offset and a first length; the first length is L, R times L, or P; and the first offset is an integer less than the first length.

Based on the foregoing possible implementation, according to different definitions of the first length, the first cyclic shift may be flexibly obtained based on different lengths L of the first sequence or different lengths P of the first reference signal.

In a possible implementation, any two first cyclic shifts in the first cyclic shift list are different.

Based on the foregoing possible implementation, obtaining the first reference signal when at least two first cyclic shifts in the first cyclic shift list are the same is equivalent to repeated extension of the sequence. In this case, an objective of a lower cross-correlation between the reference signal and another reference signal when a length of the reference signal increases cannot be achieved. Therefore, to further reduce the cross-correlation between the first reference signal and the another reference signal, the any two first cyclic shifts in the first cyclic shift list may be different.

In a possible implementation, a time domain resource for sending the first reference signal is different from a time domain resource for sending the second reference signal.

Based on the foregoing possible implementation, the first reference signal and the second reference signal are independently correlated and then jointly processed, so that correlation performance can be better. Therefore, reference signals of different channels may be transmitted on different time domain resources, so that the receiving apparatus can better distinguish between the first reference signal and the second reference signal.

In a possible implementation, the method further includes: sending first information, where the first information indicates an index of the first sequence.

Based on the foregoing possible implementation, the first information sent by the receiving apparatus may help an apparatus (for example, a sending apparatus) that receives the first information determine the first reference signal based on the first sequence corresponding to the index of the first sequence indicated by the first information and the first cyclic shift list. For example, the first sequence and the first cyclic shift list may be determined in a table lookup manner based on the index of the first sequence.

In a possible implementation, the first cyclic shift list satisfies a first condition, the first condition includes that a cross-correlation between the first reference signal and the third reference signal is less than a first threshold, the third reference signal is obtained based on one first sequence in the first sequence set and a first cyclic shift list corresponding to the first sequence, and a first sequence used to determine the first reference signal is different from a first sequence used to determine the third reference signal.

Based on the foregoing possible implementation, the first reference signal generated based on the first sequence and the first cyclic shift list that satisfies the first condition may cause a cross-correlation between the first reference signal and a reference signal (for example, the third reference signal) generated based on a sequence other than the first sequence in the first sequence set to be less than the first threshold, so that interference between the first reference signal and the third reference signal is reduced, and the receiving apparatus can better receive the first reference signal.

In a possible implementation, a (*p* + 1)^{th} element of the first reference signal is *sₚ*, and *p* is an integer greater than or equal to 0 and less than P; and *sₚ = xᵤ* × e^{j2π*αvu*}, where *xᵤ* is a (*u* + 1)^{th} element of the first sequence, *u* = *p* mod L, *αᵥ* is a (*v* + 1)^{th} first cyclic shift of the first cyclic shift list, $v = \left⌊p/L\right⌋$, mod represents a remainder or modulo operation, and └ ┘ represents rounding down. It may be understood that the foregoing descriptions of "a (*p* + 1)^{th} element of the first reference signal is *sₚ*" is based on a premise that "*s*₀ is a 1^{st} element of the first reference signal". When "*s*₀ is a 0^{th} element of the first reference signal" is used as a premise, *sₚ* is a *p*^{th} element of the first reference signal.

Based on the foregoing possible implementation, the first reference signal generated based on *sₚ* = *xᵤ* × e^{j2π*αvu*}(0 ≤ *p* < *P*) is a non-repeated extension of the first sequence, which helps improve a correlation characteristic of the reference signal.

In a possible implementation, the first reference signal is used for sensing.

Based on the foregoing possible implementation, when the first reference signal is used for sensing, the cross-correlation between the reference signal (for example, the first reference signal) generated according to the foregoing method and the another reference signal is greatly reduced, that is, interference between the reference signals is effectively reduced. Therefore, in a sensing scenario, interference between reference signals transmitted by different sending apparatuses and receiving apparatuses may be greatly reduced, thereby helping a receiving end of the reference signal better process the signal.

In a possible implementation, the first sequence and the second sequence are a multi-channel sequence.

Based on the foregoing possible implementation, a multi-channel reference signal may be obtained based on the first sequence and the second sequence, and cross-correlation sidelobes of channels in the multi-channel sequence may partially cancel each other out, to achieve a better correlation characteristic than that of a sequence of a single channel, that is, a cross-correlation between the multi-channel reference signal and another multi-channel reference signal may be reduced, thereby reducing interference between the different multi-channel reference signals.

According to a third aspect, a communication apparatus is provided, to implement the foregoing method. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible implementation, the communication apparatus may include a processing module and an interface module. The processing module may be configured to implement a processing function in any one of the foregoing aspects and the possible implementations of the foregoing aspects. The processing module may be, for example, a processor. The interface module may also be referred to as an interface unit, and is configured to implement a sending function and/or a receiving function in any one of the foregoing aspects and the possible implementations of the foregoing aspects. The interface module may include an interface circuit, a transceiver machine, a transceiver, or a communication interface.

With reference to the third aspect, in a possible implementation, the interface module includes a sending module and a receiving module that are respectively configured to implement the sending and receiving functions in any one of the foregoing aspects and the possible implementations of the foregoing aspects.

According to a fourth aspect, a communication apparatus is provided, and includes a processor. The processor is configured to: be coupled to a memory; and after reading instructions in the memory, perform the method according to any one of the foregoing aspects based on the instructions. The communication apparatus may be the sending apparatus in the first aspect or the receiving apparatus in the second aspect.

With reference to the fourth aspect, in a possible implementation, the communication apparatus further includes the memory. The memory is configured to store program instructions and data. Optionally, the memory and the processor are integrated together, or the memory is independent of the processor.

With reference to the fourth aspect, in a possible implementation, the communication apparatus is a chip or a chip system. Optionally, when the communication apparatus is the chip system, the communication apparatus may include a chip, or may include a chip and another discrete device.

According to a fifth aspect, a communication apparatus is provided, and includes a processor and an interface circuit. The interface circuit is configured to: receive a computer program or instructions, and transmit the computer program or the instructions to the processor. The processor is configured to execute the computer program or the instructions, to cause the communication apparatus to perform the method according to any one of the foregoing aspects. The communication apparatus may be the sending apparatus in the first aspect, or an apparatus including the sending apparatus, or a module in the sending apparatus in the first aspect, for example, a chip, a chip system, or a circuit, or may be a logical node, a logical module, or software that can implement a part or all of functions of the sending apparatus. Alternatively, the communication apparatus may be the receiving apparatus in the second aspect, or an apparatus including the receiving apparatus, or a module in the receiving apparatus in the second aspect, for example, a chip, a chip system, or a circuit, or may be a logical node, a logical module, or software that can implement a part or all of functions of the receiving apparatus.

With reference to the fifth aspect, in a possible implementation, the communication apparatus is a chip or a chip system. Optionally, when the communication apparatus is the chip system, the communication apparatus may include a chip, or may include a chip and another discrete device.

According to a sixth aspect, a computer-readable storage medium is provided. The computer-readable storage medium stores instructions. When the instructions are run on a computer, the computer is caused to perform the method according to any one of the foregoing aspects.

According to a seventh aspect, a computer program product including instructions is provided. When the computer program product runs on a computer, the computer is caused to perform the method according to any one of the foregoing aspects.

According to an eighth aspect, a communication system is provided. The communication system includes a sending apparatus configured to perform the method in the first aspect and a receiving apparatus configured to perform the method in the second aspect.

According to a ninth aspect, a communication system is provided. The communication system includes a sending apparatus configured to perform the method in the first aspect and a receiving apparatus. The receiving apparatus is configured to receive a reflected signal formed after a first reference signal reaches a target and is reflected by the target.

For technical effects brought by any one of the possible implementations of the third aspect to the ninth aspect, refer to the technical effects brought by the different possible implementations of the first aspect or the second aspect. Details are not described herein again.

It may be understood that the solutions in the foregoing aspects may be combined on a premise that the solutions are not contradictory.

### BRIEF DESCRIPTION OF DRAWINGS

FIG. 1 is a diagram of an architecture of a communication system according to this application;
FIG. 2 is a diagram of a hardware structure of a communication apparatus according to this application;
FIG. 3 is a schematic flowchart 1 of a signal transmission method according to this application;
FIG. 4 is a diagram 1 of a reference signal time-frequency resource according to this application;
FIG. 5 is a schematic flowchart 2 of a signal transmission method according to this application;
FIG. 6 is a diagram 2 of a reference signal time-frequency resource according to this application; and
FIG. 7 is a diagram of a structure of a communication apparatus according to this application.

### DESCRIPTION OF EMBODIMENTS

In a sensing scenario, a transmitting end sends a reference signal to an ambient environment, and a receiving end may sense information about the ambient environment by comparing a received reference signal with the known original reference signal, for example, to determine whether a to-be-detected target exists in the ambient environment, a quantity of targets, a location of the target, and the like.

It may be understood that, when the transmitting end and the receiving end are a same sensing apparatus, this sensing mode may be referred to as a self-transmitting and self-receiving sensing mode. In this sensing mode, the sensing apparatus possesses a full-duplex function to ensure that signals can be received and sent. For example, using an internet of vehicles scenario as an example, the sensing apparatus sends a reference signal to a target, receives a reflected signal formed after the reference signal reaches the target and is reflected by the target, and performs sensing based on the reference signal and the reflected signal, for example, to determine whether the target is speeding.

It may be understood that, when the transmitting end and the receiving end are different sensing apparatuses, this sensing mode is referred to as a self-transmitting and other-receiving sensing mode. For example, using an example in which two sensing apparatuses sense a target, one sensing apparatus sends a reference signal in a direction of the target; and after the reference signal reaches the target and is reflected by the target, a reflected signal is received by the other sensing apparatus.

The reference signal is generated based on a sequence having a good correlation characteristic. When a length of a reference signal that needs to be generated is greater than a length of a sequence, a cyclic extension manner is usually used. For example, when a reference signal whose length is an integer multiple of (for example, n times) L is generated based on a sequence whose length is L, cyclic extension means repeating the sequence n times to generate the reference signal. Subsequently, the reference signal may be mapped to n*L subcarriers and transmitted. For example, a reference signal $A = \left[{X}_{0}^{0},{X}_{1}^{0},…,{X}_{L - 1}^{0},{X}_{0}^{0},{X}_{1}^{0},…,{X}_{L - 1}^{0}\right]$ generated based on a sequence ${x}^{0} = \left[{x}_{0}^{0},{x}_{1}^{0},{x}_{2}^{0},…,{x}_{L - 1}^{0}\right]$ is a reference signal generated by extending a length of the sequence ***x***⁰ to twice an original length.

The sequence is an ordered set of data, and one piece of data in the ordered set may be referred to as one element of the sequence. For example, the sequence may be an M sequence, a Gold sequence, or a Zadoff-Chu sequence, and these sequences may be obtained through parsing and construction. For example, the M sequence may be obtained by using a linear feedback shift register based on a given primitive polynomial. A preferred pair of M sequences may be obtained by using two M sequences having an equal code length and different elements, and the Gold sequence may be obtained by performing a modulo-2 addition operation on the preferred pair of the M sequences. The Zadoff-Chu sequence is a complex number sequence, an amplitude is constant (for example, an amplitude is always 1), a phase is variable, and each element in the sequence may be considered as a point on a unit circle. In addition to the parsing and construction method, the sequence may also be obtained by using a computer search method. For example, a sequence set including a plurality of sequences is obtained through optimization based on artificial intelligence (artificial intelligence, AI).

To better understand the solutions provided in this application, the following separately describes a periodic auto-correlation of the sequence and a periodic cross-correlation of the sequence.

### (1) Periodic auto-correlation of the sequence

In this application, the periodic auto-correlation of the sequence is a similarity between the sequence and a sequence obtained by performing time-domain shift on the sequence. For example, using a sequence [*x*₀*, x*₁*, x*₂*,* ... , *x*_{*L*-1}] (denoted as a sequence A) as an example, a periodic auto-correlation R[*τ*] of the sequence A may be represented by the following formula: $R \left[τ\right] = {\sum }_{l = 0}^{L - 1} {x}_{l} {x}_{\left(l+τ\right) %L}^{∗}$ (1)

In the formula (1), *l* indicates a number or an index of a sequence element, *l* is an integer greater than or equal to 0 and less than L, *L* indicates a length of the sequence, L is an integer greater than 1, *τ* is an offset for performing time-domain shift on the sequence A, and a value of *τ* may be 0,1, ..., *L* - 1, may be - $\left⌊L/2\right⌋ , … - 1 , 0 , 1 , … , - \left⌊L/2\right⌋$, or may be *-L +* 1, ..., -1, 0,1, ..., *L* - 1. The following uses an example in which the value of *τ* is 0,1, ... , *L* - 1. └ ┘ indicates rounding down, * indicates taking a conjugate, and % indicates taking a remainder. An element in the sequence A may be a real number, or may be a complex number including a phase.

The receiving end may perform auto-correlation between a reference signal determined based on the sequence and a received signal obtained after the reference signal is reflected by the target. An obtained auto-correlation result may be represented graphically in a time-shift-amplitude coordinate system. It may be understood that the auto-correlation includes a main lobe and a sidelobe. The auto-correlation main lobe (which may also be referred to as an auto-correlation peak) may be understood as an auto-correlation value when a time domain shift *τ* is equal to 0, and an auto-correlation sidelobe of the sequence may be understood as an auto-correlation value when a time domain shift *τ* is not equal to 0. In an ideal case, energy of the auto-correlation sidelobe is 0. That is, the sequence is not correlated with a sequence obtained by performing time domain shift on the sequence. It should be understood that the smaller the energy the auto-correlation sidelobe of the sequence, the better, and that smaller energy of the auto-correlation sidelobe relative to the auto-correlation main lobe may be considered that the auto-correlation characteristic of the sequence is better. A reason is that, when the energy of the auto-correlation sidelobe of the sequence increases to a specific value, false detection may be caused. For example, when the energy of the auto-correlation sidelobe is large, the receiving end may consider that a target exists at a location of the sidelobe, and therefore obtain incorrect sensing information for the target.

### (2) Periodic cross-correlation of sequences

In this application, the periodic cross-correlation of the sequences is a correlation between two sequences. Using a sequence [*x*₀*, x*₁*, x₂,* ... , *x*_{*L*-1}] (denoted as a sequence A) and a sequence [*y*₀*,y*₁*,y*₂*,* ... , *y*_{*L*-1}] (denoted as a sequence B) as an example, a periodic cross-correlation *R_{x,y}*[*τ*] between the two sequences may be represented by the following formula: ${R}_{x , y} \left[τ\right] = {\sum }_{l = 0}^{L - 1} {x}_{l} {y}_{\left(l+τ\right) %L}^{∗}$ (2)

In the formula (2), *l* indicates a number or an index of a sequence element, *l* is an integer greater than or equal to 0 and less than *L,* and *L* is an integer greater than 1. *τ* is a time domain offset between the sequence A and the sequence B, and a value of *τ* may be 0,1, ... , *L* - 1, or may be $- \left⌊L/2\right⌋ , … - 1 , 0 , 1 , … , - \left⌊L/2\right⌋$, or may be *-L +* 1, ... , -1, 0,1, ... , *L -* 1. The following uses an example in which the value of *τ* is 0,1, ... , *L* - 1. An element in the sequence A and the sequence B may be a real number, or may be a complex number including a phase.

It should be understood that the energy of the auto-correlation main lobe is usually a fixed value related to a sequence length. For example, for a modulo-1 sequence whose length is *L* (that is, a modulus of each element in the sequence is 1, for example, a Zadoff-Chu sequence), the energy of the auto-correlation main lobe is *L*². Energy of a cross-correlation between the sequence A and the sequence B may be a result obtained through normalization of energy of an auto-correlation main lobe of the sequence A or the sequence B.

It should be understood that the smaller the energy of the cross-correlation between two sequences, the better. Generally, a cross-correlation between two sequences may be described by using a cross-correlation peak sidelobe level (cross-correlation peak sidelobe level, CPSL), and the CPSL is energy or an amplitude peak of the cross-correlation between the two sequences. Therefore, that the smaller the energy of the cross-correlation between the two sequences, the better may be understood as that the smaller the energy of the cross-correlation between the two sequences relative to the auto-correlation main lobe of each sequence, the better. Similarly, a larger CPSL between the two sequences A and B indicates greater interference between the two sequences, and greater interference between reference signals (for example, a signal A and a signal B) that are respectively generated based on the two sequences. For example, when the signal A and the signal B are transmitted by using a same time-frequency resource, the signal B causes cochannel interference to the signal A.

It should be understood that, in the foregoing descriptions of the sequence correlation characteristic, descriptions of energy of a related main lobe are also applicable to a related amplitude. Similarly, in the following descriptions, for example, similar descriptions of a low cross-correlation between two sequences or a low cross-correlation sidelobe between two sequences may be understood as that energy or an amplitude of the cross-correlation between the two sequences is small.

In a motion scenario, a correlation characteristic of the sequence in a Doppler effect needs to be further considered. For example, when a to-be-detected target is in a high-speed moving state, a Doppler shift exists between a reference signal sent by the transmitting end and a reflected signal of the reference signal received by the receiving end. Using a periodic auto-correlation of a sequence as an example, after the Doppler effect is considered, a periodic auto-correlation result of the formula (1) may be updated to the following formula: $R \left[τ\right] = {\sum }_{l = 0}^{L - 1} {x}_{l} {x}_{\left(l+τ\right) %L}^{∗} {e}^{j \frac{2 {πf}_{D} Tl}{L}}$ (3) ${f}_{D} = \frac{2 {Vf}_{c}}{c}$ indicates a Doppler shift caused by motion of the target, *f_{c}* is a carrier frequency, *c* is a speed of light, *V* is a movement speed of the target, and *T* indicates sending duration of the sequence. When the Doppler effect is considered, the periodic auto-correlation of the sequence may also be referred to as a periodic auto-ambiguity. Similarly, a periodic cross-correlation between the two sequences may also be referred to as a periodic cross-ambiguity. Due to existence of the Doppler shift, correlation performance of the sequence deteriorates. For example, the energy of the auto-correlation sidelobe increases, or the CPSL increases.

Usually, a length of the reference signal is related to a service requirement and an available bandwidth. For example, when a service of the reference signal is a ranging service, if a resolution corresponding to a service requirement is higher, a length of a required reference signal is longer. For another example, a larger available bandwidth indicates a larger quantity of available subcarriers and a longer length of the reference signal. However, regardless of whether a sequence is constructed based on parsing or a sequence is obtained through searching by a computer, a length of the sequence is usually not an arbitrary value. When the length of the required reference signal is greater than the length of the sequence, in a conventional technology, a long reference signal is usually generated in a cyclic extension manner, and a lower cross-correlation between reference signals cannot be implemented in this manner.

To resolve the foregoing problem, this application provides a signal transmission method. In the method, a sending apparatus may determine a first reference signal, and send the first reference signal. The first reference signal is obtained based on a first sequence and a first cyclic shift list; the first reference signal includes P elements; the first sequence is one sequence in a plurality of first sequences included in a first sequence set; the first sequence includes L elements; any first sequence in the first sequence set has a corresponding first cyclic shift list, and different first sequences correspond to different first cyclic shift lists; the first cyclic shift list includes R first cyclic shifts; and R is equal to an integer obtained by rounding P divided by L, and L, R, and P are all integers greater than or equal to 2.

In the foregoing solution, each first sequence has a corresponding first cyclic shift list, and different first sequences correspond to different first cyclic shift lists. Therefore, a cross-correlation between the first reference signal obtained based on the first sequence and the first cyclic shift list and a reference signal (for example, a third reference signal) obtained based on a sequence other than the first sequence in the first sequence set may be reduced to a maximum extent. It should be understood that the foregoing descriptions of "the first sequence" are applicable to all first sequences included in the first sequence set.

For example, an example in which the first sequence set includes ${x}^{0} = \left[{x}_{0}^{0},{x}_{1}^{0},…,{x}_{L - 1}^{0}\right]$ and ${x}^{1} = \left[{x}_{0}^{1},{x}_{1}^{1},…,{x}_{L - 1}^{1}\right]$, P = 2L (namely, R = 2), a first cyclic shift list corresponding to ***x***⁰ is $\left[0, \frac{{τ}_{a}}{L}\right]$, and a first cyclic shift list corresponding to ***x***¹ is $\left[0, \frac{{τ}_{b}}{L}\right]$ is used for description. It is assumed that the two sequences ***x***⁰ and ***x***¹ are time domain sequences. After discrete Fourier transform (Discrete Fourier Transform, DFT) is performed on the time domain sequences, expression forms of the sequences in frequency domain may be obtained. The sequence ***x***⁰ may be represented as ${X}^{0} = \left[{X}_{0}^{0},{X}_{1}^{0},…,{X}_{L - 1}^{0}\right]$ in frequency domain, and the sequence ***x***¹ may be represented as ${X}^{1} = \left[{X}_{0}^{1},{X}_{1}^{1},…,{X}_{L - 1}^{1}\right]$ in frequency domain. In this solution, a first reference signal $A = \left[{X}_{0}^{0},{X}_{1}^{0},…,{X}_{L - 1}^{0},{X}_{0}^{0}{e}^{j \frac{2 {πτ}_{a} 0}{L}},{X}_{1}^{0}{e}^{j \frac{2 {πτ}_{a}}{L}},…,{X}_{L - 1}^{0}{e}^{j \frac{2 {πτ}_{a} \left(L-1\right)}{L}}\right]$ is obtained based on the first cyclic shift lists $\left[0, \frac{{τ}_{a}}{L}\right]$ corresponding to ***x***⁰ and ***x***⁰, and a third reference signal $B = \left[{X}_{0}^{1},{X}_{1}^{1},…,{X}_{L - 1}^{1},{X}_{0}^{1}{e}^{j \frac{2 {πτ}_{b} 0}{L}},{X}_{1}^{1}{e}^{j \frac{2 {πτ}_{b}}{L}},…,{X}_{L - 1}^{1}{e}^{j \frac{2 {πτ}_{b} \left(L-1\right)}{L}}\right]$ is obtained based on the first cyclic shift lists $\left[0, \frac{{τ}_{b}}{L}\right]$ corresponding to ***x***¹ and ***x***¹. In the foregoing descriptions, ***A*** is an expression form of the first reference signal in frequency domain, and ***B*** is an expression form of the third reference signal in frequency domain. Subsequently, P elements in ***A*** may be respectively mapped to P subcarriers to send the first reference signal, and P elements in ***B*** may be respectively mapped to P subcarriers to send the third reference signal. An expression form of a reference signal in time domain may be obtained by performing inverse discrete Fourier transform (Inverse Discrete Fourier Transform, IDFT) on a frequency-domain form of the reference signal.

It should be understood that both a frequency-domain expression form and a time-domain expression form of a reference signal may represent the reference signal. Similarly, both a frequency-domain expression form and a time-domain expression form of a sequence may represent the sequence. For example, ***x***⁰ and ***X***⁰ represent a same sequence. The foregoing process is described by using an example in which the first sequence set includes ***x***⁰ and ***x***¹, or may be described as follows: The first sequence set includes ***X***⁰ and ***X***¹ , the first cyclic shift list corresponding to ***X***⁰ is $\left[0, \frac{{τ}_{a}}{L}\right]$, and the first cyclic shift list corresponding to ***X***¹ is $\left[0, \frac{{τ}_{b}}{L}\right]$. In the following descriptions, the first reference signal may also be referred to as a reference signal A, and the third reference signal may also be referred to as a reference signal B.

It may be learned from a DFT characteristic that performing a conjugate dot product on the reference signal A and the reference signal B in frequency domain is equivalent to performing a periodic correlation operation on the reference signal A and the reference signal B in time domain. Therefore, performing IDFT on a result of the conjugate point multiplication on the reference signal A and the reference signal B in frequency domain can yield a cross-correlation result of the reference signal A and the reference signal B in time domain. A result obtained by performing conjugate point multiplication on the reference signal A and the reference signal B in frequency domain is ${C}^{˜} = \left[{X}_{0}^{0}{{X}_{0}^{1}}^{∗},{X}_{1}^{0}{{X}_{1}^{1}}^{∗},…,{X}_{L - 1}^{0}{{X}_{L - 1}^{1}}^{∗},{X}_{0}^{0}{{X}_{0}^{1}}^{∗},{X}_{1}^{0}{{X}_{1}^{1}}^{∗}{e}^{j \frac{2 π Δ τ}{L}},…,{X}_{L - 1}^{0}{{X}_{L - 1}^{1}}^{∗}{e}^{j \frac{2 π Δ τ \left(L-1\right)}{L}}\right]$ (where Δ*τ* = *τₐ - τ_{b}*). A cross-correlation between the reference signal A and the reference signal B in time domain may be ***c̃*** = IDFT(**C̃**) = [*c̃*₀, *c̃*₁, ... , *c̃*_{2*L*-1}] obtained by performing IDFT on **C̃**. According to the DFT characteristic, the cross-correlation between the reference signal A and the reference signal B satisfies the following relationship: ${{c}^{˜}}_{2 l - 1} = \frac{{c}_{l} + {c}_{\left(l+Δτ\right) %L}}{2}$ (4)

*c =* [*c*₀*, c*₁*, c*₂*,* ... , *c*_{*L*-1}] indicates a result of a cross-correlation between the sequences ***x***⁰ and ***x***¹, *cₗ* indicates a value of the cross-correlation between the sequences ***x***⁰ and ***x***¹ at a location *l*, *c̃*_{2*l*-1} indicates a value of the cross-correlation between the reference signal A and the reference signal B at a location 2*l* - 1, and a value of *l* is 0,1, ..., L - 1. A location of a peak sidelobe of the cross-correlation between the sequences ***x***⁰ and ***x***¹ may be represented as $p = {argmax}_{l} \left|{c}_{l}\right|$ , namely, $\left|{c}_{p}\right| = {max}_{l} \left|{c}_{l}\right|$. If Δ*τ* = 0, namely, *τₐ* = *τ_{b}*, the formula (4) is changed to *c̃*_{2*l*-1} = *cₗ*. A location of a peak sidelobe of the cross-correlation between the reference signal A and the reference signal B is 2*p* - 1, and an amplitude peak of the cross-correlation sidelobe is still |*c̃*_{2*p*-1}| = |*cₚ*|. That is, CPSLs of the reference signal A and the reference signal B are the same as CPSLs of the sequences ***x***⁰ and ***x***¹. In this case, Δ*τ* = 0 cannot implement a lower cross-correlation between the reference signals. If Δ*τ* ≠ 0, namely, *τₐ* ≠ *τ_{b}*, |*cₚ*| ≠ |*c*_{(*p+*Δ*τ*)%*L*}|. In this case, an amplitude peak of an original cross-correlation sidelobe is $\left|{{c}^{˜}}_{2 p - 1}\right| = \left|\frac{{c}_{p} + {c}_{\left(p+Δτ\right) %L}}{2}\right| \leq \left|\frac{{c}_{p}}{2}\right| + \left|\frac{{c}_{\left(p+Δτ\right) %L}}{2}\right| < \left|{c}_{p}\right|$ . This process may be understood as follows: A new cross-correlation sidelobe is obtained by averaging an original cross-correlation peak sidelobe and a sidelobe located at a distance of Δ*τ* from the peak sidelobe. Because an amplitude of the sidelobe at the distance of Δ*τ* from the original peak sidelobe is less than an amplitude of the original peak sidelobe, an amplitude of the new cross-correlation sidelobe is always less than the amplitude of the original peak sidelobe. It should be understood that other elements (for example, *c̃*_{2*l*}) in ***c̃*** are obtained through interpolation of elements in ***c***. By appropriately selecting *τₐ* and *τ_{b}*, it can be ensured that amplitudes of these elements are always less than the amplitude of the original peak sidelobe. In conclusion, when Δ*τ* ≠ 0, CPSLs of the reference signal A and the reference signal B are expected to be further reduced. Therefore, the different first sequences correspond to the different first cyclic shift lists, so that a cross-correlation between different reference signals can be reduced. In other words, according to the method, when different devices respectively receive reference signals obtained based on the different first sequences, a cross-correlation between the reference signals, namely, interference between the signals, can be greatly reduced, thereby improving signal receiving quality.

It should be understood that, when the Doppler effect is not considered, the reference signal A and the sequence ***x***⁰ have a same peak amplitude of the auto-correlation sidelobe. However, when there is a Doppler shift, by appropriately selecting a cyclic shift list corresponding to ***x***⁰, it is possible to reduce a peak amplitude of an auto-ambiguity sidelobe of the reference signal A.

In this application, the cyclic shift may alternatively have another name, for example, a phase rotation factor. Therefore, in this application, a first cyclic shift may be replaced with a first phase rotation factor, and a second cyclic shift may be replaced with a second phase rotation factor. This applies throughout and will not be repeated below.

In this application, the first cyclic shift list may alternatively be replaced with another name, for example, may be replaced with a first cyclic shift set or a first cyclic shift group. This is not limited.

In this application, a cross-correlation between two reference signals may alternatively be a cross-correlation between the two reference signals when a Doppler effect is considered, or a cross-correlation between two reference signals may alternatively be understood as a cross-ambiguity between the two reference signals.

The following describes implementations of this application in detail with reference to the accompanying drawings.

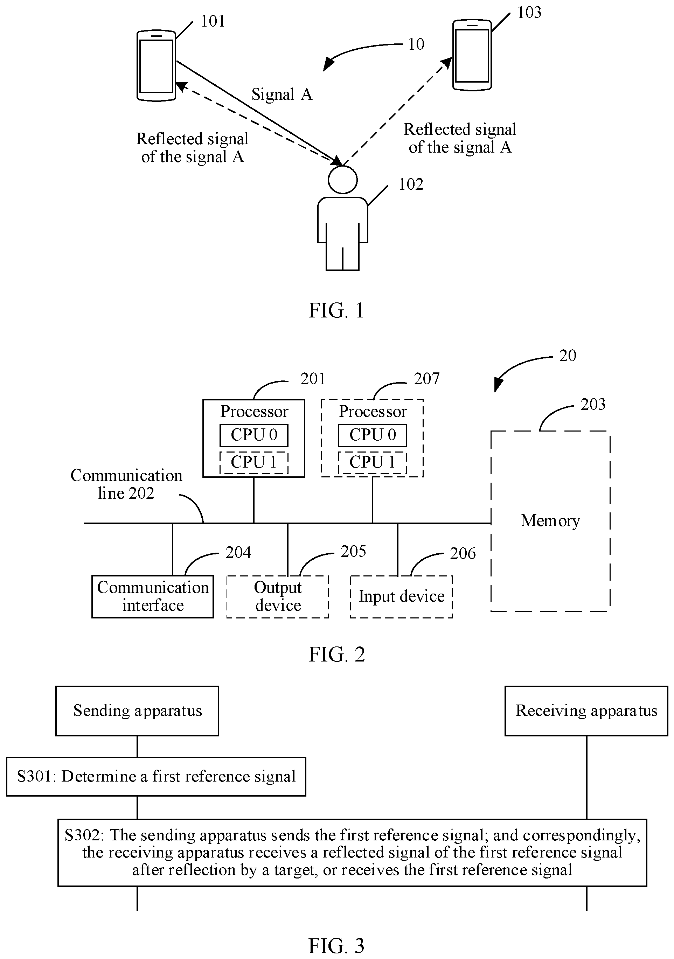

It may be understood that the method provided in this application may be applied to various communication systems. For example, the communication system may be a universal mobile telecommunications system (universal mobile telecommunications system, UMTS), a long term evolution (long term evolution, LTE) system, a 5th generation (5th generation, 5G) network communication system, a wireless fidelity (wireless fidelity, Wi-Fi) system, a 3rd generation partnership project (3rd generation partnership project, 3GPP)-related communication system, a future evolved communication system (for example, a 6th generation (6th generation, 6G) communication system), or a system integrating a plurality of systems. This is not limited. 5G may also be referred to as new radio (new radio, NR). The following uses a communication system 10 shown in FIG. 1 as an example to describe the method provided in this application. FIG. 1 is merely a diagram, and does not constitute any limitation on a scenario to which the technical solutions provided in this application are applicable.

FIG. 1 is a diagram of an architecture of the communication system 10 according to this application. In FIG. 1, the communication system 10 may include a sensing apparatus 101. The communication system 10 further includes at least one of a target 102 or a sensing apparatus 103.

In this application, the sensing apparatus, for example, the sensing apparatus 101 or the sensing apparatus 103, has a sensing capability and a communication capability. For example, the sensing apparatus may be a terminal or a network device.

The target, for example, the target 102 in this application is an object that can be sensed by the sensing apparatus. The target may have mobility (for example, the target is a person or a vehicle), or may not have mobility. The target may have a communication capability (for example, the target is a terminal), or may not have a communication capability (for example, the target is a passive object, for example, a vehicle or a bicycle). For example, the target includes but is not limited to persons, animals, various engineering vehicles, various transportation means, various terminals described above, or the like. The engineering vehicle is, for example, an excavator, a crane, or a digger. The transportation means may be used to transport goods, for example, a vehicle, a train, a high-speed train, an aircraft, or an uncrewed aerial vehicle.

In a possible implementation, the communication system 10 in FIG. 1 may be used in a sensing scenario of a self-transmitting and self-receiving mode. For example, the sensing apparatus 101 sends a signal A to the target 102. After the signal A is reflected by the target 102, a reflected signal of the signal A is formed, and the reflected signal is received by the sensing apparatus 101.

In another possible implementation, the communication system 10 in FIG. 1 may be used in a sensing scenario of a self-transmitting and other-receiving mode. For example, the sensing apparatus 101 sends a signal A to the target 102. After the signal A is reflected by the target 102, a reflected signal of the signal A is formed, and the reflected signal is received by the sensing apparatus 103. The sensing apparatus 103 may obtain a location of the target 102 based on a direction of the received reflected signal of the signal A and a time difference between the received signal and the sent signal, and then return location information of the target 102 to the sensing apparatus 101. In this way, the sensing apparatus 101 may sense the location of the target 102. Alternatively, when there is a direct path between the sensing apparatus 101 and the sensing apparatus 103, the sensing apparatus 103 may also receive the signal A, and the sensing apparatus 103 may return data obtained by processing the signal A to the sensing apparatus 101, so that the sensing apparatus 101 may obtain a location of the sensing apparatus 103. This is not limited in this application.

Both the sensing apparatus 101 and the sensing apparatus 103 may be network devices; or both the sensing apparatus 101 and the sensing apparatus 103 may be terminals; or the sensing apparatus 101 may be a network device, and the sensing apparatus 103 may be a terminal; or the sensing apparatus 101 may be a terminal, and the sensing apparatus 103 may be a network device. This is not limited.

It may be understood that the communication system 10 shown in FIG. 1 is merely used as an example, and is not intended to limit the technical solutions of this application. A person skilled in the art should understand that, in a specific implementation process, the communication system 10 further includes another sensing apparatus. When receiving a signal (for example, the reflected signal of the signal A) from a target, the sensing apparatus (for example, the sensing apparatus 103) that receives the signal may further receive an interference signal from the another sensing apparatus or an interference signal obtained after a signal sent by the another sensing apparatus is reflected by the target. In addition, the communication system 10 may further include another device, and a quantity of sensing apparatuses or targets may also be determined according to a specific requirement. This is not limited.

The terminal in this application may be deployed on land, including being deployed indoor, outdoor, handheld, or vehicle-mounted, may be deployed on a water surface (for example, on a ship), or may be deployed in the air (for example, on an airplane, a balloon, or a satellite). The terminal may also be referred to as a terminal device. The terminal device may be user equipment (user equipment, UE), a mobile station (mobile station, MS), a mobile terminal (mobile terminal, MT), or the like; or may be a device configured to provide voice or data connectivity for a user. The UE includes a handheld device, a vehicle-mounted device (for example, a vehicle, a bicycle, an electric vehicle, an airplane, a ship, a train, or a high-speed train), a wearable device (for example, a smartwatch, a smart band, or a pedometer), or a compute device that has a wireless communication function. For example, the UE may be a mobile phone (mobile phone), a mobile internet device (mobile internet device, MID), or the like. The UE may alternatively be a smart robot, a robot arm, a workshop device, a smart home device (for example, a refrigerator, a television, an air conditioner, or an electric meter), a wireless terminal in industrial control, a wireless terminal in self driving, a wireless terminal in telemedicine, a wireless terminal in a smart grid (smart grid), a wireless terminal in transportation security, a wireless terminal in a smart city (smart city), a wireless terminal in a smart home (smart home), a vehicle-mounted terminal, a road side unit (road side unit, RSU) having a terminal function, a flight device (for example, a smart robot, a hot air balloon, an uncrewed aerial vehicle, or an airplane), or the like. The terminal may alternatively be another device having a terminal function. For example, the terminal may alternatively be a device that functions as a terminal in device to device (device to device, D2D) communication.

In this application, the terminal may be a terminal in an internet of things (internet of things, IoT) system. IoT is an important part of future information technology development. A main technical characteristic of IoT is to connect things to a network by using a communication technology, to implement a smart network for human-machine interconnection and thing-thing interconnection. The terminal in this application may be a terminal in machine type communication (machine type communication, MTC). The terminal in this application may be a vehicle-mounted module, a vehicle-mounted assembly, a vehicle-mounted component, a vehicle-mounted chip, or a vehicle-mounted unit that is built in a vehicle as one or more components or units. The vehicle uses the vehicle-mounted module, the vehicle-mounted assembly, the vehicle-mounted component, the vehicle-mounted chip, or the vehicle-mounted unit that is built in the vehicle, to implement the method in this application. The terminal in this application may be a transportation means, for example, a vehicle. Therefore, this application may be applied to an internet of vehicles, for example, vehicle to everything (vehicle to everything, V2X), a long term evolution-vehicle technology (long term evolution-vehicle, LTE-V), and vehicle to vehicle (vehicle to vehicle, V2V).

A form of the terminal is not limited in this application. An apparatus configured to implement a function of the terminal may be a terminal, or may be an apparatus that can support the terminal in implementing the function, for example, a chip system. The apparatus may be mounted in the terminal or used in cooperation with the terminal.

In this application, the network device includes but is not limited to an evolved NodeB (NodeB, eNB, or e-NodeB, evolved NodeB) in LTE, a next-generation evolved NodeB (next-generation eNB, ng-eNB) in LTE, a base station (gNodeB or gNB) in NR, a next-generation RAN (next-generation radio access network, NG-RAN) node, a transmitting point (transmitting point, TP) or a transmission receiving point (transmission receiving point/transmission reception point, TRP), a subsequently evolved base station in 3GPP, a next-generation base station (next-generation NodeB, gNB), a next-generation base station in a 6G mobile communication system, a base station in a future mobile communication system, a satellite, an access node in a Wi-Fi system, a wireless relay node, a wireless backhaul node, an integrated access and backhaul (integrated access and backhaul, IAB) node, a RAN node, which may be deployed on a high-altitude platform or a satellite, in a non-terrestrial network (non-terrestrial network, NTN) communication system of a mobile switching center, or the like. The base station may be a macro base station, a micro base station, a pico base station, a small cell, a relay station, a balloon station, or the like. A plurality of base stations may support networks of a same technology mentioned above, or may support networks of different technologies mentioned above. The base station may include one or more co-site or non-co-site TRPs. The network device may alternatively be a device that functions as a base station in D2D communication, internet of vehicles communication, uncrewed aerial vehicle communication, or machine communication. The network device may alternatively be a radio controller in a cloud radio access network (cloud radio access network, CRAN) scenario. The network device may alternatively be a central unit (central unit, CU), a distributed unit (distributed unit, DU), a CU-control plane (control plane, CP), a CU-user plane (user plane, UP), a radio unit (radio unit, RU), a road side unit (road side unit, RSU) having a function of the base station, a wired access gateway, a core network element, or the like. The network device may alternatively be a server, a wearable device, a machine communication device, a vehicle-mounted device, or the like. For example, the RAN node in a V2X technology may be an RSU. The following uses an example in which the network device is a base station for description. A plurality of RAN nodes may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

A form of the network device is not limited in this application. An apparatus configured to implement a function of the network device may be the network device, or may be an apparatus that can support the network device in implementing the function, for example, a chip system. The apparatus may be mounted in the network device or used in cooperation with the network device.

Optionally, each module (for example, the sensing apparatus 101 or the sensing apparatus 103) in FIG. 1 of this application may also be referred to as communication apparatuses, and may be a general-purpose device or a dedicated device. This is not specifically limited in this application.

Optionally, a related function of each module (for example, the sensing apparatus 101 or the sensing apparatus 103) in FIG. 1 of this application may be implemented by one device, or may be jointly implemented by a plurality of devices, or may be implemented by one or more functional modules in one device. This is not specifically limited in this application. It may be understood that the foregoing function may be a network element in a hardware device, a software function running on dedicated hardware, a combination of hardware and software, or a virtualized function instantiated on a platform (for example, a cloud platform).

During specific implementation, each module (for example, the sensing apparatus 101 or the sensing apparatus 103) in FIG. 1 of this application may have a composition structure shown in FIG. 2, or include components shown in FIG. 2. FIG. 2 is a diagram of a hardware structure of a communication apparatus applicable to this application. The communication apparatus 20 includes at least one processor 201 and at least one communication interface 204, to implement the method provided in this application. The communication apparatus 20 may further include a communication line 202 and a memory 203.

The processor 201 may be a general-purpose central processing unit (central processing unit, CPU), a microprocessor, an application-specific integrated circuit (application-specific integrated circuit, ASIC), or one or more integrated circuits configured to control execution of programs in the solutions in this application.

The communication line 202 may include a path for transferring information between the foregoing components, for example, a bus.

The communication interface 204 is configured to communicate with another device or a communication network. The communication interface 204 may be any apparatus such as a transceiver, for example, may be an ethernet interface, a radio access network (radio access network, RAN) interface, a wireless local area network (wireless local area network, WLAN) interface, a transceiver, a pin, a bus, an interface circuit, or a transceiver circuit.

The memory 203 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other computer-accessible medium that can be configured to carry or store expected program code in a form of an instruction or a data structure. However, this is not limited thereto. The memory may exist independently, and is coupled to the processor 201 through the communication line 202. The memory 203 may alternatively be integrated with the processor 201. The memory provided in this application may be usually non-volatile.

The memory 203 is configured to store computer-executable instructions for executing the solutions provided in this application, and the processor 201 controls execution. The processor 201 is configured to execute the computer-executable instructions stored in the memory 203, to implement the method provided in this application. Alternatively, optionally, in this application, the processor 201 may perform a processing-related function in the method provided below in this application, and the communication interface 204 is responsible for communicating with another device or a communication network. This is not specifically limited in this application.

Optionally, the computer-executable instructions in this application may also be referred to as application code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 201 may include one or more CPUs, for example, a CPU 0 and a CPU 1 in FIG. 2.

In an embodiment, the communication apparatus 20 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 20 may further include an output device 205 and/or an input device 206. The output device 205 is coupled to the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 is coupled to the processor 201, and may receive an input of a user in a plurality of manners. For example, the input device 206 may be a mouse, a keyboard, a touchscreen device, or a sensing device.

It may be understood that the composition structure shown in FIG. 2 does not constitute a limitation on the communication apparatus. In addition to the components shown in FIG. 2, the communication apparatus may include more or fewer components than those shown in the figure, or some components may be combined, or different component arrangements may be used.

The following describes the method provided in this application with reference to the accompanying drawings. Modules in the following embodiments may have components shown in FIG. 2. Details are not described again.

It may be understood that names of messages between modules, names of parameters in messages, or the like in the following embodiments of this application are merely examples, and there may alternatively be other names during specific implementation. This is not specifically limited in this application.

It may be understood that, in this application, "/" may represent an "or" relationship between associated objects. For example, A/B may represent A or B. "And/or" may be used to describe three relationships that exist between the associated objects. For example, A and/or B may represent the following three cases: Only A exists, both A and B exist, and only B exists, where A and B may be singular or plural. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of technical solutions of this application, in this application, terms such as "first" and "second" may be used to distinguish between technical features with same or similar functions. The terms such as "first" and "second" do not limit a quantity and an execution sequence, and the terms such as "first" and "second" do not limit a definite difference. In this application, the word such as "example" or "for example" indicates an example, an illustration, or a description. Any embodiment or design scheme described as an "example" or "for example" should not be explained as being more preferred or having more advantages than another embodiment or design scheme. The word such as "example" or "for example" is used to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification do not necessarily mean a same embodiment. In addition, the particular features, structures, or characteristics may be combined in one or more embodiments in any proper manner. It may be understood that sequence numbers of the processes do not mean execution sequences in various embodiments of this application. The execution sequences of the processes should be determined based on functions and internal logic of the processes, and should not be construed as any limitation on implementation processes of this application.

It may be understood that, in this application, "when", "in a case in which", and "if" mean that corresponding processing is performed in an objective situation, are not intended to limit time, do not require a necessary determining action in an implementation, and do not mean any other limitation.

"Simultaneously" in this application may be understood as being at a same time point, may be understood as being in a time period, or may be understood as being in a same period.

It may be understood that, in some scenarios, some optional features in this application may be independently implemented without depending on another feature, for example, a solution on which the optional features are currently based, to resolve a corresponding technical problem and achieve corresponding effects. Alternatively, in some scenarios, the optional features are combined with other features based on requirements. Correspondingly, the apparatus provided in this application may also correspondingly implement these features or functions. Details are not described herein.

It may be understood that a same step or steps or technical features that have a same function in this application may be mutually referenced in different embodiments.

It may be understood that processing like collection, storage, use, processing, transmission, provision, and disclosure of personal information of a user in this application complies with provisions of relevant laws and regulations, and does not violate public order and good customs.

It may be understood that, in this application, a sending apparatus or a receiving apparatus may perform a part or all of steps in this application. These steps are merely examples. In this application, other steps or variations of various steps may alternatively be performed. In addition, the steps may be performed in different sequences presented in this application, and not all the steps in this application need to be performed.

It may be understood that, the method provided below in this application is illustrated by using an example in which the sending apparatus and the receiving apparatus are used as execution bodies of an interaction example. However, an execution body of the interaction example is not limited in this application. For example, the sending apparatus in the method provided below in embodiments of this application may be a chip, a chip system, or a processor that supports the sending apparatus in implementing the method, or may be a logical node, a logical module, or software that can implement all or a part of the sending apparatus; and the receiving apparatus in the method provided below in this application may be a chip, a chip system, or a processor that supports the receiving apparatus in implementing the method, or may be a logical node, a logical module, or software that can implement all or a part of the receiving apparatus.

FIG. 3 shows a signal transmission method according to this application. The method may include the following steps.

S301: A sending apparatus determines a first reference signal.

In this application, the sending apparatus may be the sensing apparatus 101 in the communication system 10 shown in FIG. 1.

The first reference signal is obtained based on a first sequence and a first cyclic shift list. The first reference signal may be used for sensing.

In this application, the first sequence includes L elements, and L is an integer greater than or equal to 2. For example, the first sequence may be represented as [*x*₀, *x*₁, *x*₂, ... , *x*_{*L-*1}]. The first cyclic shift list includes R first cyclic shifts, and R is an integer greater than or equal to 2. For example, the first cyclic shift list may be represented as [*a*₀, *a*₁, *a*₂, ... , *a*_{*R*-1}]. The first reference signal includes P elements, and P is an integer greater than or equal to 2. For example, the first reference signal may be represented as [*s*₀, *s*₁, *s*₂, ... , *s*_{*P*-1}].

It may be understood that, for the P elements included in the first reference signal, the P elements may be sequentially referred to as a 1^{st} element, a 2^{nd} element, a 3^{rd} element, ..., and a P^{th} element of the first reference signal, or the P elements may be referred to as a 0^{th} element, a 1^{st} element, a 2^{nd} element, ..., and a (P-1)^{th} element of the first reference signal. For example, the first reference signal may be represented as [*s*₀, *s*₁, *s*₂, ... , *s*_{*P*-1}]. In the former representation, *sₚ* is a (*p* + 1)^{th} element of the first reference signal. For example, *s*₀ is a 1^{st} element of the first reference signal. In the latter representation, *sₚ* is a *p*^{th} element of the first reference signal. For example, *s*₀ is a 0^{th} element of the first reference signal. *p* is an integer greater than or equal to 0 and less than P. Similarly, similar representations in this application may be understood similarly. For example, elements in the first cyclic shift list, elements in the first sequence, and channels in a multi-channel sequence may be understood similarly. Details are not described again. For ease of description, the following uses the former representation as an example for description. That is, *sₚ* is referred to as the (*p* + 1)^{th} element of the first reference signal.

In a possible design, the (*p* + 1)^{th} element *sₚ* of the first reference signal satisfies the following relationship: ${s}_{p} = {x}_{u} \times {e}^{j 2 π {α}_{v} u}$ (5)

j indicates an imaginary unit, *p* is an integer greater than or equal to 0 and less than P, and R is equal to an integer obtained by rounding P divided by L. *xᵤ* is a (*u* + 1)^{th} element of the first sequence, *u* = *p*modL, and mod indicates a modulo operation or a modulo operation. *αᵥ* is a (*v* + 1)^{th} first cyclic shift of the first cyclic shift list, and $v = \left⌊p/L\right⌋$.

It may be understood that, in the formula *(5), sₚ* is a (*p* + 1)^{th} element of the first reference signal in frequency domain, and *xᵤ* is a (*u* + 1)^{th} element of the first sequence in frequency domain. That is, for the formula (5), [*s*₀*, s*₁*, s*₂*,* ..., *s*_{*P*-1}] is a frequency domain expression form of the first reference signal, and [*x*₀*, x*₁*, x*₂*,* ... , *x*_{*L*-1}] is a frequency domain expression form of the first sequence. R may be an integer obtained by rounding P divided by L upward, or may be an integer obtained by rounding P divided by L downward, or may be an integer obtained by rounding P divided by L to a nearest integer. Therefore, P may be less than or equal to RL (for example, a product of R and L), or may be greater than or equal to RL. When P is less than or equal to RL, a value range of *p* in the formula (5) is {0,1, ... , P - 1}. When P is greater than RL, the first reference signal may be divided into two parts. A first part includes first RL elements. That is, for *p* whose value range is {0,1, ..., RL - 1}, this part may be first expanded by an integer multiple of the first sequence according to the formula (5), and *sₚ* may be calculated according to the formula (5). A second part corresponds to *p* whose value range is {RL, ..., P - 1} in the first reference signal, and may be understood as remaining elements *s_{RL}, s*_{*RL*+1}*,* ... , *s*_{*P*-2}*, s*_{*P*-1} in the first reference signal other than the first part. These elements may be set to 0, or elements in the second part may be padded based on the elements in the first part, for example, *s_{RL} = s*₀, *s*_{*RL*+1} *= s*₁*, ..., s*_{*P*-2} = *s*_{*P-RL*-2}*, s*_{*P-RL*-1} or *s_{RL}* = *s*_{(*R*-1)}*_{L}, s*_{*RL*+1} = *s*_{(*R*-1)*L*+1}*,* ... , *s*_{*P*-2} = *s*_{(*R*-1)*L+P-RL*-2}*, s*_{(*R*-1)*L+P-RL*-1}. A padding method is not limited.

For example, using an example in which a length of the first reference signal is 9, the first sequence is [*x*₀*, x*₁*, x*₂], and the first cyclic shift list is [*a*₀*, a*₁*, a*₂], the first reference signal obtained based on the first sequence and the first cyclic shift list may be represented as [*x*₀ × e^{j2π*α*0·0}, *x*₁ × e^{j2π*α*0·1}, *x*₂ × e^{j2π*α*0·2}, *x*₀ × e^{j2π*α*1·0}*, x*₁ × e^{j2π*α*1·1}, *x*₂ × e^{j2π*α*1·2}, *x*₀ × e^{j2π*α*2·0}, *x*₁ × e^{j2π*α*2·1}, *x*₂ × e^{j2π*α*2·2}].

For example, using an example in which a length of the first reference signal is 10, the first sequence is [*x*₀*, x*₁*, x*₂], and the first cyclic shift list is [*a*₀*, a*₁*, a*₂], the first reference signal obtained based on the first sequence and the first cyclic shift list may be represented as [*x*₀ × e^{j2π*α*0·0}, *x*₁ × e^{j2π*α*0·1}, *x*₂ × e^{j2π*α*0·2}, *x*₀ × e^{j2π*α*1·0}, *x*₁ × e^{j2π*α*1·1}, *x*₂ × e^{j2π*α*1·2}, *x*₀ × e^{j2π*α*2·0}, *x*₁ × e^{j2π*α*2·1}, *x*₂ × e^{j2π*α*2·2}, *x*₀ × e^{j2π*α*0·0}] . First nine elements are all determined according to a method for performing integer multiple expansion on the first sequence. To be specific, a cyclic shift corresponding to first three elements is *α*₀, a cyclic shift corresponding to 4^{th} to 6^{th} elements is *α*₁, a cyclic shift corresponding to 7^{th} to 9^{th} elements is *α*₂, and a 10^{th} element is padded with a 1^{st} element, that is, the 10^{th} element is equal to the 1^{st} element.

For example, using an example in which a length of the first reference signal is 11, the first sequence is [*x*₀*, x*₁*, x*₂], and the first cyclic shift list is [*a*₀*, a*₁*, a*₂*, a*₃], the first reference signal obtained based on the first sequence and the first cyclic shift list may be represented as [*x*₀ × e^{j2π*α*0·0}, *x*₁ × e^{j2π*α*0·1}, *x*₂ × e^{j2π*α*0·2}, *x*₀ × e^{j2π*α*1·0}, *x*₁ × e^{j2π*α*1·1}, *x*₂ × e^{j2π*α*1·2}, *x*₀ × e^{j2π*α*2·0}, *x*₁ × e^{j2π*α*2·1}, *x*₂ × e^{j2π*α*2·2}, *x*₀ × e^{j2π*α*3·0}, *x*₀ × e^{j2π*α*3·1}]. A cyclic shift corresponding to first three elements is *α*₀, a cyclic shift corresponding to 4^{th} to 6^{th} elements is *α*₁, a cyclic shift corresponding to 7^{th} to 9^{th} elements is *α*₂, and a cyclic shift corresponding to 10^{th} and 11^{th} elements is *α*₃. It may be understood that, according to the integer multiple expansion method, 12 elements are first generated, where a 12^{th} element is *x*₀ × e^{j2π*α*3·2}. Because the length of the first reference signal is expected to be 11, first 11 elements need to be reserved, and the 12^{th} element *x*₀ × e^{j2π*α*3·2} needs to be removed.

In a possible implementation, when a length P of the first reference signal is not equal to an integer multiple of a length L of the first sequence, the foregoing process of determining the reference signal may be understood as follows: First, a long sequence whose length is RL is obtained based on the first sequence whose length is L, that is, R segments of a short sequence whose length is L are concatenated into the long sequence whose length is RL. An (r+1)^{th} segment of the short sequence is determined based on the first sequence and an (r+1)^{th} first cyclic shift in the first cyclic shift list. For example, the first sequence is [*x*₀*, x*₁*, x*₂*,* ... , *x*_{*L*-1}], the (r+1)^{th} segment of the short sequence is [*x*₀ × e^{j2π*αr*·0}, *x*₁ × e^{j2π*αr*·1}, *x*₂ × e^{j2π*αr*·2}, ..., *x*_{*L*-1} × e^{j2π*αr*·(*L*-1)}], and *αᵣ* is the (r+1)^{th} first cyclic shift in the first cyclic shift list, where r is any integer greater than or equal to 0 and less than R. Second, the long sequence whose length is RL is truncated or extended to obtain the first reference signal whose length is P. A specific extension method may be as follows: An element that needs to be padded is set to 0, or a remaining element is padded based on a previous element, or the like.

In another possible implementation, when a length P of the first reference signal is not equal to an integer multiple of a length L of the first sequence, the reference signal is determined according to the following method: First, the first sequence whose length is L is truncated or extended to obtain a basic short sequence whose length is L'. Then, a long sequence whose length is R' × L' is obtained based on the basic short sequence whose length is L'. That is, R' segments of the short sequence whose length is L' are concatenated into the long sequence whose length is R' × L'. Each segment of the short sequence is obtained based on the basic short sequence and a cyclic shift (reference is made to a related calculation manner in the formula (5), and details are not described herein again). R' is equal to an integer obtained by rounding P divided by L', and the cyclic shift may be determined based on the first cyclic shift list corresponding to the first sequence. For example, a cyclic shift used to obtain an (r' + 1)^{th} segment of the short sequence may be an (r'%R + 1)^{th} first cyclic shift in the first cyclic shift list, where r' is any integer greater than or equal to 0 and less than R. Finally, a long sequence whose length is R' × L' is truncated or extended to obtain the first reference signal whose length is P.

For example, using an example in which the first reference signal needs to occupy a bandwidth of 100 MHz, a subcarrier spacing is 30 kHz, and 12 combs are used, the first reference signal needs to occupy 277 subcarriers, that is, the length P of the first reference signal is 277. When the length L of the first sequence is 64, a sequence whose length is 64*4=256 may be first obtained based on the first sequence and the first cyclic shift list, and then the sequence whose length is 256 is extended to a signal whose length is 277, namely, the first reference signal. A reason for multiplying 64 by 4 is that rounding 277 divided by 64 downward yields 4. Alternatively, a sequence whose length is 64 may be first extended to a sequence whose length is 69, then a sequence whose length is 69*4=276 is obtained through concatenation, and the sequence whose length is 276 is extended by 1 to finally obtain a signal whose length is 277, namely, the first reference signal.

It may be understood that the first sequence, the first cyclic shift list, and the first reference signal are merely examples of representation, and may be represented in another form during specific application. This is not limited.

In a possible implementation, the first cyclic shift is a quotient of a first offset and a first length. The first length is L, or R times L, or P, and the first offset is an integer less than or equal to the first length. For example, the first cyclic shift, the first length, and the first offset may satisfy the following relationship: ${α}_{r} = \frac{{τ}_{r}}{F}$ (6)

In the formula (6), F is the first length, *αᵣ* is the (r + 1)^{th} first cyclic shift in the first cyclic shift list, *τᵣ* is the first offset corresponding to *αᵣ*, and r is any integer greater than or equal to 0 and less than R. *τᵣ* is an integer less than F. Optionally, a value range of *τᵣ* may be {0,1, ..., F - 1}, or may be {-F + 1, -F + 2, ..., -1,0}, or may be $\left\{-\left⌊F/2\right⌋,…,-1,0,1,…,\left⌊F/2\right⌋\right\}$.

Optionally, in the first cyclic shift list, a 1^{st} first cyclic shift is 0. As described above, it should be understood that, that the 1^{st} first cyclic shift is 0 may also be expressed as follows: A 0^{th} first cyclic shift is 0. This is not limited. Both expressions indicate that a start element of the first cyclic shift list is 0. In this case, it may also be considered that the first cyclic shift list includes R-1 first cyclic shifts.

For example, using an example in which a reference signal *A* is generated based on a sequence ${X}^{0} = \left[{X}_{0}^{0},{X}_{1}^{0},…,{X}_{L - 1}^{0}\right]$, when the first cyclic shift list is [*α*₀, *α*₁], the reference signal may be represented as $A = \left[{X}_{0}^{0},{X}_{1}^{0},…,{X}_{L - 1}^{0},{X}_{0}^{0}{e}^{j 2 {πa}_{1} ⋅ 0},{X}_{1}^{0}{e}^{j 2 {πa}_{1} ⋅ 1},…,{X}_{L - 1}^{0}{e}^{j 2 {πτ}_{{a}_{1}} \left(L-1\right)}\right]$. It may be understood that, when the reference signal is generated, elements of the first sequence may be used as first L elements of the reference signal. That is, a value of a first cyclic shift corresponding to a group of elements does not affect an element of the reference signal. Therefore, that the first cyclic shift list may also include R-1 cyclic shift values is equivalent to a case in which the 1^{st} first cyclic shift is 0 by default.

Optionally, any two first cyclic shifts in the first cyclic shift list are different.

It may be understood that, if at least two first cyclic shifts in the first cyclic shift list are the same, at least two segments of the sequence are repeated in the first reference signal obtained based on the first cyclic shift list and the first sequence. As described above, the sequence obtained through repeated extension cannot achieve an objective that a cross-correlation between the reference signal and another reference signals decrease as the length of the reference signal increases. Therefore, to further reduce the cross-correlation between the first reference signal and the another reference signal, the any two first cyclic shifts in the first cyclic shift list may be designed to be different. In addition, by designing the any two first cyclic shifts in the first cyclic shift list to be different, it is also conducive to reducing a peak amplitude of an auto-ambiguity sidelobe of the first reference signal.

In a possible implementation, the first sequence is one sequence in a plurality of first sequences included in a first sequence set; and any first sequence in the first sequence set has a corresponding first cyclic shift list, and different first sequences correspond to different first cyclic shift lists.

It may be understood that, in the first sequence set, the different first sequences correspond to the different first cyclic shift lists, to reduce a cross-correlation between reference signals generated based on the different first sequences. It should be understood that, if first cyclic shift lists used by two first sequences are the same, a cross-correlation between two reference signals separately obtained through extension according to the method of the formula (5) is equivalent to a cross-correlation obtained by performing repeated cyclic extension on the two first sequences. This cannot achieve an objective of reducing an amplitude peak of a cross-correlation sidelobe. Therefore, first cyclic shift lists corresponding to any two first sequences in the first sequence set are different.

Optionally, any two first sequences in the first sequence set have a corresponding first cyclic shift difference list; the first cyclic shift difference list includes a plurality of first cyclic shift differences; any two first cyclic shift differences in the plurality of first cyclic shift differences are different; and the first cyclic shift difference is a difference between first cyclic shifts corresponding to the two first sequences. The first cyclic shift difference list may be understood as a list including differences between first cyclic shifts corresponding to a same index in two first cyclic shift lists corresponding to two first sequences.

It may be understood that, for any two different first sequences in the first sequence set, using an example in which the first sequences are ***X***^{*n*0} and ***X***^{*n*1} for description, a first cyclic shift list corresponding to ***X***^{*n*0} is [*a*₀*, a*₁*, a*₂*, ..., a*_{*R*-1}], a first cyclic shift list corresponding to ***X***^{*n*1} is [*b*₀*, b*₁*, b*₂, ..., *b*_{*R*-1}], a reference signal ***Y***^{*n*0} may be generated based on ***X***^{*n*0}, and a reference signal ***Y***^{*n*1} may be generated based on ***X***^{*n*1}. A first cyclic shift difference list corresponding to the sequences ***X***^{*n*0} and ***X***^{*n*1} is [*b*₀ *- a*₀, *b*₁ - *a*₁*,* ..., *b*_{*R*-1} - *a*_{*R*-1}]. If a plurality of first cyclic shift differences in the first cyclic shift difference list are the same, namely, *b*₀ - *a*₀ *= b*₁ *- a*₁ *=* ··· = *b*_{*R*-1} - *a*_{*R*-1}, a result of a cross-correlation between ***Y***^{*n*0} and ***Y***^{*n*1} is equivalent to performing cyclic shift on a cross-correlation result obtain after repeated cyclic extension of ***X***^{*n*0} and ***X***^{*n*1}. An amplitude peak of a cross-correlation sidelobe between two reference signals still remains unchanged.

For example, when differences in the first cyclic shift difference list are all the same, for example, the differences are all 0, namely, *b*₀ *- a*₀ *= b*₁ *- a*₁ *=* ··· *= b*_{*R*-1} *- a*_{*R*-1} = 0, the first cyclic shift lists corresponding to the any two first sequences in the first sequence set are the same. In this case, the objective of reducing the amplitude peak of the cross-correlation sidelobe cannot be achieved.

Further, if there are two same first cyclic shift differences in the first cyclic shift difference list, it is equivalent to that there are two repeated segments of the sequence in the reference signals ***Y***^{*n*0} and ***Y***^{*n*1}, which is not conducive to implementing a lower amplitude peak of a cross-correlation sidelobe between the two reference signals. Therefore, a first cyclic shift list corresponding to any two sequences ***X***^{*n*0} and ***X***^{*n*1} should satisfy *b*₀ *- a*₀ ≠ *b*₁ *- a*₁ ≠ ··· ≠ *b*_{*R*-1} - *a*_{*R*-1}, that is, any two differences in the first cyclic shift difference list are different.

Optionally, when R is greater than or equal to 3 (that is, when the first cyclic shift list includes at least three first cyclic shifts), in the R first cyclic shifts included in any first cyclic shift list, a difference between an (i+1)^{th} first cyclic shift and an i^{th} first cyclic shift is equal to a difference between the i^{th} first cyclic shift and an (i-1)^{th} first cyclic shift, and i is any integer greater than 1 and less than R.

It may be understood that an example in which a first cyclic shift list corresponding to a first sequence ***X***^{*n*0} is [*a*₀*, a*₁*, a*₂*, ... , a*_{*R*-1}] is used, where *a*₂ - *a*₁ *= a*₁ *- a*₀, *a*₃ - *a*₂ = *a*₂ *- a*₁*, a*₄ - *a*₃ = *a*₃ - *a*₂, and so on. That is, the first cyclic shift list may be considered as an arithmetic sequence. For example, if a tolerance corresponding to ***X***^{*n*0} is equal to *x, a*₁ *= a*₀ *+ x, a*₂ = *a*₁ *+ x = a*₀ + *2x,* and so on. In this case, the first cyclic shift list corresponding to ***X***^{*n*0} may be determined by *a*₀ and the tolerance x. Similarly, a first cyclic shift list corresponding to a first sequence ***X***^{*n*1} is [*b*₀*, b*₁*, b*₂, ..., *b*_{*R*-1}], and also satisfies *b*₂ - *b*₁ = *b*₁ - *b*₀, *b*₃ - *b*₂ = *b*₂ - *b*₁*, b*₄ *- b*₃ = *b*₃ - *b*₂, and so on. If a tolerance corresponding to ***X***^{*n*1} is equal to y, *b*₁ *= b*₀ *+ y, b*₂ *= b*₁ *+ y = b*₀ *+ 2y,* and so on. In this case, a first cyclic shift list corresponding to ***X***^{*n*1} may be determined by *b*₀ and the tolerance *y.* It should be understood that, by ensuring that *a*₀ is different from *b*₀, and/or that the tolerances *x* and *y* are different, it may be easy to implement that the first cyclic shift list corresponding to ***X***^{*n*0} is different from the first cyclic shift list corresponding to ***X***^{*n*1}. At this time, a difference list between the first cyclic shift list corresponding to ***X***^{*n*0} and the first cyclic shift list corresponding to ***X***^{*n*1} may be represented as [*b*₀ *- a*₀, *b*₀ *- a*₀ *+ y - x, b*₀ *- a*₀ + 2 * (*y* - *x*), ..., *b*_{*R*-1} *- a*_{*R*-1} *+* (*R* - 1) * (*y - x*)], and it may be found that the difference list may also be considered as an arithmetic sequence, where a tolerance is *y* - *x*. It should be understood that, by ensuring that the tolerances *x* and *y* are different, it may be easy to implement that any two differences in cyclic shift difference lists corresponding to ***X***⁰ and ***Y***⁰ are different. Further, by ensuring that the tolerances (for example, *x* and *y*) are not 0, it may easy to implement that any two first cyclic shifts in the first cyclic shift list are different.

Optionally, in the R first cyclic shifts included in any first cyclic shift list, a 1^{st} cyclic shift is equal to 0, an n^{th} first cyclic shift is n-1 times a 2^{nd} first cyclic shift, and n is any integer greater than 1 and less than or equal to R.

For example, using two first sequences (for example, ***X***^{*n*0} and ***X***^{*n*1}) as an example, a first cyclic shift list corresponding to ***X***^{*n*0} is [*a*₀*, a*₁*, a*₂*, ..., a*_{*R*-1}], where *a*₀ *=* 0, *a*₂ = 2*a*₁, *a*₃ *=* 3*a*₁, and so on, that is, the first cyclic shift list corresponding to ***X***^{*n*0} may be represented as [0, *a*₁, 2*a*₁, 3*a*₁, ... , (*R* - 1)*a*_{*R-*1}]. Similarly, a first cyclic shift list corresponding to ***X***^{*n*1} is [*b*₀*, b*₁*, b*₂, ..., *b*_{*R*-1}], where *b*₀ = 0, *b* = 2*b*₁, *b* = 3*b,* and so on, that is, the first cyclic shift list corresponding to ***X***^{*n*1} may be represented as [0, *b*₁*,* 2*b*₁, 3*b*₁, ... , (*R* - 1)*b*_{*R-*1}]. It should be understood that, by ensuring that *a*₁ and *b*₁ are different, it may be easy to implement that the first cyclic shift list corresponding to ***X***^{*n*0} is different from the first cyclic shift list corresponding to ***X***^{*n*1}.

It may be understood that, according to the foregoing method, a first cyclic shift difference list between the first cyclic shift list corresponding to ***X***^{*n*0} and the first cyclic shift list corresponding to ***X***^{*n*1} may be represented as [0, *b*₁ - *a*₁, 2(*b*₁ - *a*₁), ... , (*R* - 1) * (*b*₁ *- a*₁)]. In this way, by ensuring that *a*₁ and *b*₁ are different, it may be easy to implement that any two differences in the cyclic shift difference list corresponding to ***X***⁰ and ***Y***⁰ are different. In this method, a cyclic shift list may be determined by a single cyclic shift. For example, the first cyclic shift list corresponding to ***X***^{*n*0} may be directly determined by *a*₁*,* and the first cyclic shift list corresponding to ***X***^{*n*1} may be directly determined by *b*₁. It should be understood that, by ensuring that a cyclic shift (for example, *a*₁ or *b*₁) is not 0, it may be easy to implement that any two first cyclic shifts in the first cyclic shift list are different.

Optionally, in the R first cyclic shifts included in any first cyclic shift list, an m^{th} first cyclic shift is m times a 1^{st} first cyclic shift, and m is any integer greater than 0 and less than or equal to R.

For example, a first cyclic shift list corresponding to a first sequence ***X***^{*n*0} is [*a*₀*, a*₁*, a*₂*,* ..., *a*_{*R-*1}], where *a*₁ = 2*a*₀, *a*₂ = 3*a*₁, *a*₃ = 4*a*₁, and so on, that is, the first cyclic shift list corresponding to ***X***^{*n*0} may be represented as [*a*₀*,* 2*a*₀, 3*a*₀, ..., *Ra*₀]. Similarly, a first cyclic shift list corresponding to a first sequence ***X***^{*n*1} may be represented as [*b*₀*,* 2*b*₀*,* 3*b*₀*,* ..., *Rb*₀]. It should be understood that, by ensuring that *a*₀ and *b*₀ are different, it may be easy to implement that the first cyclic shift list corresponding to ***X***^{*n*0} is different from the first cyclic shift list corresponding to ***X***^{*n*1}. At this time, a difference list between the first cyclic shift list corresponding to ***X***^{*n*0} and the first cyclic shift list corresponding to ***X***^{*n*1} may be represented as [*b*₀ - *a*₀, 2(*b*₀ - *a*₀), 3(*b*₀ - *a*₀), ..., *R*(*b*₀ - *a*₀)]. In this way, by ensuring that *a*₀ and *b*₀ are different, it may be easy to implement that any two differences in the cyclic shift difference list corresponding to ***X***⁰ and ***Y***⁰ are different. In this method, a cyclic shift list may be determined by a single cyclic shift. For example, the first cyclic shift list corresponding to ***X***^{*n*0} may be directly determined by *a*₀, and the first cyclic shift list corresponding to ***X***^{*n*1} may be directly determined by *b*₀. Further, by ensuring that a cyclic shift (for example, *a*₀ or *b*₀) is not 0, it may be easy to implement that any two first cyclic shifts in the first cyclic shift list are different.

It should be understood that, as stated above, the foregoing is described by using an example in which the R first cyclic shifts included in the first cyclic shift list are respectively referred to as a 1^{st} first cyclic shift, a 2^{nd} first cyclic shift, ..., and an R^{th} first cyclic shift. If the R first cyclic shifts included in the first cyclic shift list are respectively referred to as a 0^{th} first cyclic shift, a 1^{st} first cyclic shift, ..., and an (R-1)^{th} first cyclic shift of the first cyclic shift list, the foregoing method may also be expressed as follows:

Optionally, when R is greater than or equal to 3 (that is, when the first cyclic shift list includes at least three first cyclic shifts), in the R first cyclic shifts included in any first cyclic shift list, a difference between a (q+1)^{th} first cyclic shift and a q^{th} first cyclic shift is equal to a difference between the q^{th} first cyclic shift and a (q-1)^{th} first cyclic shift, where q is any integer greater than 0 and less than R-1.

Optionally, in the R first cyclic shifts included in any first cyclic shift list, a 0^{th} cyclic shift is equal to 0, an f^{th} first cyclic shift is f times a 1^{st} first cyclic shift, and f is any integer greater than 0 and less than R.

Optionally, in the R first cyclic shifts included in any first cyclic shift list, a g^{th} first cyclic shift is g+1 times a 0^{th} first cyclic shift, and g is any integer greater than or equal to 0 and less than R.

It may be understood that the first sequence and the first cyclic shift list may be pre-defined in a protocol, or may be pre-configured. In addition, the sending apparatus may alternatively obtain the first sequence and the first cyclic shift list from another device.

Optionally, the sending apparatus, for example, a terminal device, receives first information from a receiving apparatus, and determines the first sequence and the first cyclic shift list based on the first information. The receiving apparatus is an apparatus, for example, a network device, that receives the first reference signal.

Optionally, the first information indicates an index of the first sequence. For example, the first information includes the index of the first sequence. The sending device may determine, based on the index of the first sequence, the first sequence and the first cyclic shift list corresponding to the first sequence.

In a possible implementation, the index of the first sequence is an index of the first sequence in the first sequence set, and there is a determined mapping relationship among an index of each first sequence, the first sequence, and the first cyclic shift list corresponding to the first sequence. For example, the mapping relationship is represented in a form of a table. The mapping relationship may be pre-defined in a protocol, pre-configured, or configured by the network device by using a broadcast message. Before determining the first reference signal, the sending apparatus receives the first information, and determines, based on the mapping relationship and the index of the first sequence indicated by the first information, the first sequence and the first cyclic shift list that are used for generating the first reference signal. For example, the first sequence and the first cyclic shift list may be determined in a table lookup manner.

It should be understood that, due to different sending apparatuses or a same sending apparatus at different moments requiring reference signals of different lengths to be generated, a quantity of cyclic shifts included in a cyclic shift list corresponding to each sequence in the pre-defined or configured mapping relationship may be greater than a quantity R of cyclic shifts currently required for generating the first reference signal. In this case, the R first cyclic shifts currently used for generating the first reference signal may be first R cyclic shifts in a cyclic shift list in the mapping relationship, or R consecutive cyclic shifts, or R cyclic shifts selected according to a specific rule. This is not limited in this application.

In another possible implementation, the first information further indicates another parameter, and the first cyclic shift list may be determined by using the another parameter.

Optionally, the first information may indicate a cyclic shift, and the cyclic shift is used to determine the first cyclic shift list. For example, using an example in which the cyclic shift indicated by the first information is *a*, with reference to the foregoing description, it can be learned that the first cyclic shift list may be [0, *a*, 2*a*, ..., (*R* - 1)*a*], or the first cyclic shift list may be [*a*, 2*a*, 3*a* ... ,*Ra*].

Optionally, the first information may further indicate a cyclic shift and a tolerance, and the sending apparatus determines the first cyclic shift list based on the cyclic shift and the tolerance. The tolerance is a tolerance corresponding to an arithmetic sequence including a plurality of first cyclic shifts in the first cyclic shift list when the difference between the (i+1)^{th} first cyclic shift and the i^{th} first cyclic shift is equal to the difference between the i^{th} first cyclic shift and the (i-1)^{th} first cyclic shift. For example, using an example in which the cyclic shift indicated by the first information is *a* and the tolerance is *x*, with reference to the foregoing description, it can be learned that the first cyclic shift list may be [*a*, *a* + *x*, *a* + 2*x*, ..., *a* + (*R* - 1)*x*].

In addition, the first information may also be from another device in addition to the receiving apparatus. For example, both the sending apparatus and the receiving apparatus are terminal devices, and the first information is from the network device.

Optionally, the first cyclic shift list satisfies a first condition, the first condition includes that a cross-correlation between the first reference signal and a third reference signal is less than a first threshold, the third reference signal is obtained based on one first sequence in the first sequence set and a first cyclic shift list corresponding to the first sequence, and a first sequence used to determine the first reference signal is different from a first sequence used to determine the third reference signal. It should be understood that, that the cross-correlation between the first reference signal and the third reference signal is less than the first threshold may be that a peak amplitude of a cross-correlation sidelobe or a peak amplitude of a cross-ambiguity sidelobe between the first reference signal and the third reference signal is less than the first threshold. Optionally, the first condition may further include that a peak amplitude of an auto-ambiguity sidelobe of the first reference signal is less than a second threshold.

For example, for a first sequence set including N first sequences, a first cyclic shift list corresponding to each first sequence may be solved according to the following optimization problem: ${argmin}_{\left\{{φ}^{0},{φ}^{1},…,{φ}^{N - 1}\right\}} {max}_{{n}_{0} , {n}_{1} ∈ \left\{0,1,…,N-1\right\} , {n}_{0} \neq {n}_{1}} CPSL \left〈{Y}^{{n}_{0}}, {Y}^{{n}_{1}}\right〉$ (7)

***φ***^{*n*0} indicates a first cyclic shift list corresponding to a first sequence ***X***^{*n*0} whose index is *n*₀ in the first sequence set, ***φ***^{*n*0} indicates a first cyclic shift list corresponding to a first sequence ***X***^{*n*0} whose index is *n*₁ in the first sequence set, ***Y***^{*n*0} indicates a reference signal determined by ***X***^{*n*0} and ***φ***^{*n*0} according to the formula (5), ***Y***^{*n*1} indicates a reference signal determined by ***X***^{*n*1} and ***φ***^{*n*1} according to the formula (5), and *CPSL* < ***Y***^{*n*0}, ***Y***^{*n*1} > indicates a peak amplitude or energy of a cross-correlation sidelobe or a peak amplitude or energy of a cross-correlation sidelobe between reference signals ***Y***^{*n*0} and ***Y***^{*n*1}. The foregoing solving process may be performed by the network device. For example, the network device determines, by using the foregoing solving process, a mapping relationship among an index of each first sequence, each first sequence, and a corresponding first cyclic shift list, and then broadcasts the mapping relationship to the terminal device.

It may be understood that the length P of the first reference signal may be pre-defined in a protocol, or may be pre-configured, or may be configured based on configuration information sent by another device. For example, the sending apparatus is a terminal device, and receives configuration information from the network device, to determine the length P of the first reference signal. Optionally, the length P of the first reference signal is the integer multiple of the length L of the first sequence, which is conducive to ensuring a good auto-correlation characteristic of the first reference signal and a good cross-correlation characteristic between the first reference signal and another reference signal.

It can be learned from the foregoing solution that, for each first sequence in the first sequence set, each first sequence has the corresponding first cyclic shift list, and the different first sequences correspond to the different first cyclic shift lists. Therefore, a cross-correlation between the first reference signal obtained based on the first sequence and the first cyclic shift list and a reference signal (for example, the third reference signal) obtained based on a sequence other than the first sequence in the first sequence set may be greatly reduced. Therefore, when the receiving apparatus receives the first reference signal, interference caused by another reference signal to the signal received by the receiving apparatus may be very small. Optionally, the first reference signal may be used in a sensing scenario, or may be used in another scenario. For example, the first reference signal may be a positioning reference signal (positioning reference signal, PRS) or another reference signal in a communication system, and is used in scenarios like positioning and communication. This is not limited.

S302: The sending apparatus sends the first reference signal; and correspondingly, the receiving apparatus receives a reflected signal of the first reference signal after reflection by a target, or receives the first reference signal.

In this application, when the sensing scenario is a self-transmitting and self-receiving mode, the receiving apparatus may be the same as the sending apparatus, and is the sensing apparatus 101 in the communication system 10 shown in FIG. 1. When the sensing scenario is a self-transmitting and other-receiving mode, the receiving apparatus may be different from the sending apparatus, and is the sensing apparatus 103 in the communication system 10 shown in FIG. 1.

In a possible implementation, when there is a direct path between the sending apparatus and the receiving apparatus, the receiving apparatus may directly receive the first reference signal, and the receiving apparatus may return, to the sending apparatus or a third-party apparatus, data obtained by processing the first reference signal, so that the sending apparatus or the third-party apparatus may sense related information of the receiving apparatus, for example, a location of the receiving apparatus. The third-party apparatus is, for example, a network element responsible for a sensing or positioning function in a core network, or a sensing application server.

In another possible implementation, the first reference signal or a reference signal generated by using a similar method may be used for sensing. To be specific, the sending apparatus sends a reference signal (for example, the first reference signal); and after the reference signal is reflected by the target, the receiving apparatus receives a reflected signal of the reference signal, and the receiving apparatus obtains target-related sensing information based on the received reflected signal and the reference signal. Alternatively, the receiving apparatus may return, to the sending apparatus or a third-party apparatus, data obtained by processing the reference signal, so that the sending apparatus or the third-party apparatus obtains target-related sensing information. The third-party apparatus is, for example, a network element responsible for a sensing or positioning function in a core network, or a sensing application server.

It may be understood that the receiving apparatus also needs to locally generate the reference signal (for example, the first reference signal) sent by the sending apparatus, to perform related processing on the received signal for sensing, and the receiving apparatus may also determine, in a configuration manner similar to the foregoing, a used sequence and a cyclic shift corresponding to the sequence, and then generate the local reference signal according to the foregoing method. Optionally, the sending apparatus may send second information to the receiving apparatus, and the receiving apparatus determines, based on the second information, the used sequence and the cyclic shift corresponding to the sequence for generating the local reference signal. For example, the sending apparatus is a terminal device, and the receiving apparatus is another terminal device.

Optionally, the sending apparatus respectively maps the P elements of the first reference signal in frequency domain to P subcarriers, and sends the first reference signal on the P subcarriers.

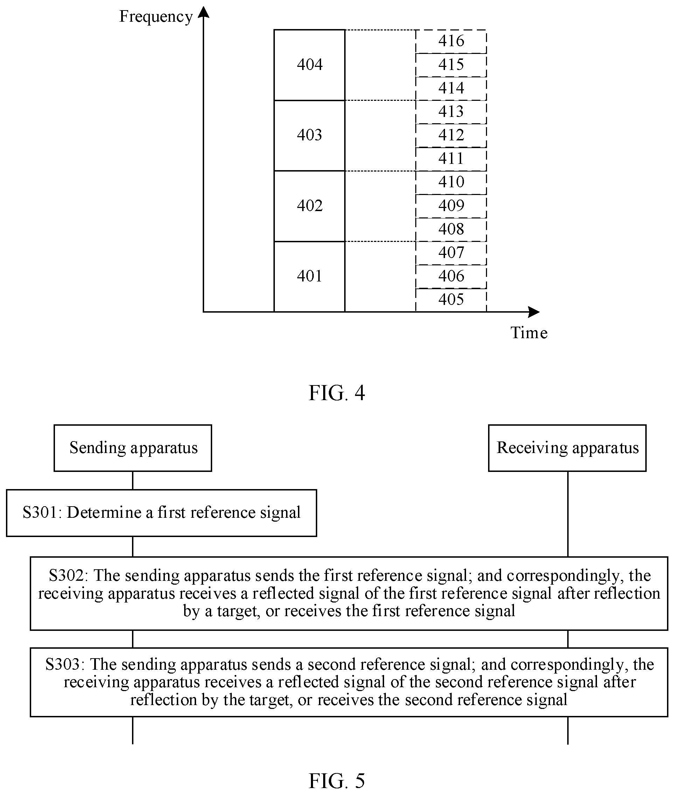

It may be understood that FIG. 4 is a diagram of a time-frequency resource for which the sending apparatus sends the first reference signal on the P subcarriers. In FIG. 4, the length L of the first sequence is 3, the length P of the first reference signal is 12, and a quantity of first cyclic shifts is R=P/L=4. Based on different corresponding first cyclic shifts, the first reference signal may be divided into four segments. The four segments respectively occupy a time-frequency resource 401, a time-frequency resource 402, a time-frequency resource 403, and a time-frequency resource 404, and each segment includes three elements. To be specific, three elements included in a first segment of the first reference signal respectively occupy a time-frequency resource 405 to a time-frequency resource 407, three elements included in a second segment of the first reference signal respectively occupy a time-frequency resource 408 to a time-frequency resource 410, three elements included in a third segment of the first reference signal respectively occupy a time-frequency resource 411 to a time-frequency resource 413, and three elements included in a fourth segment of the first reference signal respectively occupy a time-frequency resource 414 to a time-frequency resource 416. It may be understood that the time-frequency resource 401 includes the time-frequency resource 405 to the time-frequency resource 407, the time-frequency resource 402 includes the time-frequency resource 408 to the time-frequency resource 410, the time-frequency resource 403 includes the time-frequency resource 411 to the time-frequency resource 413, the time-frequency resource 404 includes the time-frequency resource 414 to the time-frequency resource 416, the time-frequency resource 405 to the time-frequency resource 416 may be considered as expansion of the time-frequency resource 401 to the time-frequency resource 404, and all the time-frequency resources in the figure occupy a same time domain resource. It may be understood that each of the time-frequency resource 405 to the time-frequency resource 416 corresponds to one subcarrier in frequency domain. A plurality of subcarriers corresponding to the time-frequency resource 405 to the time-frequency resource 416 may be continuously distributed in frequency domain, or may be discontinuously distributed at an equal interval in a comb form.

For example, the first sequence is represented as ${X}^{{n}_{0}} = \left\{{X}_{0}^{{n}_{0}}, {X}_{1}^{{n}_{0}}, {X}_{2}^{{n}_{0}}\right\}$ in frequency domain. In the three elements included in the first segment of the first reference signal, an element corresponding to the time-frequency resource 405 may be represented as ${X}_{0}^{{n}_{0}} {e}^{j 2 {πφ}_{0}^{{n}_{0}} ⋅ 0}$, an element corresponding to the time-frequency resource 406 may be represented as ${X}_{1}^{{n}_{0}} {e}^{j 2 {πφ}_{0}^{{n}_{0}} ⋅ 1}$, and an element corresponding to the time-frequency resource 407 may be represented as ${X}_{2}^{{n}_{0}} {e}^{j 2 {πφ}_{0}^{{n}_{0}} ⋅ 2}$. In the three elements included in the second segment of the first reference signal, an element corresponding to the time-frequency resource 408 may be represented as ${X}_{0}^{{n}_{0}} {e}^{j 2 {πφ}_{1}^{{n}_{0}} ⋅ 0}$, an element corresponding to the time-frequency resource 409 may be represented as ${X}_{1}^{{n}_{0}} {e}^{j 2 {πφ}_{1}^{{n}_{0}} ⋅ 1}$, and an element corresponding to the time-frequency resource 410 may be represented as ${X}_{2}^{{n}_{0}} {e}^{j 2 {πφ}_{2}^{{n}_{0}} ⋅ 2}$. In the three elements included in the third segment of the first reference signal, an element corresponding to the time-frequency resource 411 may be represented as ${X}_{0}^{{n}_{0}} {e}^{j 2 {πφ}_{2}^{{n}_{0}} ⋅ 0}$, an element corresponding to the time-frequency resource 412 may be represented as ${X}_{1}^{{n}_{0}} {e}^{j 2 {πφ}_{2}^{{n}_{0}} ⋅ 1}$, and an element corresponding to the time-frequency resource 413 may be represented as ${X}_{2}^{{n}_{0}} {e}^{j 2 {πφ}_{2}^{{n}_{0}} ⋅ 2}$. In the three elements included in the fourth segment of the first reference signal, an element corresponding to the time-frequency resource 414 may be represented as ${X}_{0}^{{n}_{0}} {e}^{j 2 {πφ}_{3}^{{n}_{0}} ⋅ 0}$, an element corresponding to the time-frequency resource 415 may be represented as ${X}_{1}^{{n}_{0}} {e}^{j 2 {πφ}_{3}^{{n}_{0}} ⋅ 1}$, and an element corresponding to the time-frequency resource 416 may be represented as ${X}_{2}^{{n}_{0}} {e}^{j 2 {πφ}_{3}^{{n}_{0}} ⋅ 2}$.

It should be understood that, in this application, for ease of description, an example in which the length of the first sequence is 3 is provided. However, it should be understood that an actual length of the first sequence may be a larger value, for example, 12, 24, 36, 64, or 128. This is not limited. Similarly, in this application, an example in which a value R obtained by rounding the length of the reference signal divided by a length of the sequence is 3 is further provided. However, it should be understood that R may alternatively be another value, for example, may be an integer ranging from 2 to 10, or a larger value. This is not limited.

Optionally, in a possible implementation of the method shown in FIG. 3, the sending apparatus may further send a second reference signal to the receiving apparatus, and the first reference signal and the second reference signal may be jointly processed to achieve a better correlation characteristic than that of a single reference signal (for example, the first reference signal), so that interference of another reference signal is further reduced when the receiving apparatus receives the first reference signal and the second reference signal. The better correlation characteristic may be understood as that energy of an auto-correlation sidelobe and/or a cross-correlation sidelobe is lower. Specifically, as shown in FIG. 5, the method shown in FIG. 3 may further include the following steps.

S303: The sending apparatus sends the second reference signal; and correspondingly, the receiving apparatus receives a reflected signal of the second reference signal after reflection by the target, or receives the second reference signal.

In a possible implementation, the second reference signal is determined based on a second sequence and a second cyclic shift list; the second reference signal includes P elements; the second sequence is a sequence corresponding to the first sequence; the second sequence is one sequence in a plurality of second sequences included in a second sequence set, and the second sequence includes L elements; any second sequence in the second sequence set has a corresponding second cyclic shift list, and different second sequences correspond to different second cyclic shift lists; the second cyclic shift list includes R second cyclic shifts; and the first sequence set is associated with the second sequence set, and each first sequence in the first sequence set has a corresponding second sequence in the second sequence set.

Usually, the multi-channel sequence may be obtained in a computer search manner. For example, if a sequence C is a K channel sequence and each channel includes L elements, a total quantity of elements included in the sequence C is *L* * *K*, and the multi-channel sequence C may be represented as [[*x*_{0,0}, *x*_{1,0}, *x*_{2,0}, ... , *x*_{*L*-1,0}], ... , [*x*₀*_{,k}, x*₁*_{,k}, x*₂*_{,k},* ... , *x*_{*L*-1*,k*}]*,* ... , [*x*_{0,*K*-1}, *x*_{1,*K*-1}*, x*_{2,*K*-1}, ... , *x*_{*L*-1*,K*-1}]], where *k* is an index of the channel, *k* ∈ [0, *K* - 1], *l* is an index of an element in the channel, and *l* ∈ [0, *L -* 1]. Specifically, using an example in which a value range of the channel index of the multi-channel sequence is [0, *K* - 1] for description, [*x*_{0,0}*, x*_{1,0}, *x*_{2,0}, *x*_{*L*-1,0}] corresponds to a channel 0, *... ,* [*x*₀*_{,k}, x*₁*_{,k}, x*₂*_{,k},* ... , *x*_{*L*-1*,k*}] corresponds to a channel *k,* and so on, [*x*_{0*,K*-1}*, x*_{1*,K*-1}*, x*_{2*,K*-1}*,* ... , *x*_{*L*-1,*K*-1}] corresponds to a channel *K -* 1. Alternatively, it may be understood that [*x*_{0,0}*, x*_{1,0}, *x*_{2,0}, ... , *x*_{*L*-1,0}] corresponds to a 1^{st} channel, [*x*₀*_{,k}, x*₁*_{,k}, x*₂*_{,k},* ... , *x*_{*L*-1*,k*}] corresponds to a (*k* + 1)^{th} channel, and so on, [*x*_{0*,K*-1}*, x*_{1*,K*-1}*, x*_{2*,K*-1}*,* ... , *x*_{*L*-1,*K*-1}] corresponds to a *K*^{th} channel. This is not limited in this application.

It may be understood that, in the foregoing steps, the first sequence may be a single-channel sequence, or may be a sequence of one channel in the multi-channel sequence. The multi-channel sequence includes a plurality of different sequences, and each sequence may correspond to one channel. An auto-correlation or cross-correlation of the multi-channel sequence is obtained by independently performing correlation on the sequences of each channel and then superimposing the sequences. In this way, correlation sidelobes of the channels may partially cancel each other out, to achieve a better correlation characteristic than that of a single channel. Specifically, a sequence periodic auto-correlation *Rₖ*[*τ*] of each channel *k* may be obtained according to the formula (1), and a periodic auto-correlation of the multi-channel sequence may be represented as the following formula: $R \left[τ\right] = {\sum }_{k = 0}^{K - 1} {R}_{k} \left[τ\right] = {\sum }_{k = 0}^{K - 1} {\sum }_{l = 0}^{L - 1} {x}_{l , k} {x}_{\left(l+τ\right) %L , k}^{∗}$ (8)

Similarly, for the periodic cross-correlation of the multi-channel sequence, if a sequence D is another K-channel sequence and may be represented as [[*y*_{0,0}*, y*_{1,0}*, y*_{2,0}*,* ... , *y*_{*L*-1*,0*}]*, ... ,* [*y*₀*_{,k}, y*₁*_{,k}, y*₂*_{,k},* ... , *y*_{*L*-1*,k*}]*,* ..., [*y*_{0*,K*-1}*, y*_{1*,K*-1}*, y*_{2*,K*-1}*,* ... , *y*_{*L*-1*,K*-1}]], a periodic cross-correlation between the sequence C and the sequence D may be represented as the following formula: ${R}^{x , y} \left[τ\right] = {\sum }_{k = 0}^{K - 1} {R}_{k}^{x , y} \left[τ\right] = {\sum }_{k = 0}^{K - 1} {\sum }_{l = 0}^{L - 1} {x}_{l , k} {y}_{\left(l+τ\right) %L , k}^{∗}$ (9)

A plurality of reference signals may be generated based on the multi-channel sequence, and the plurality of reference signals may be combined and jointly used for sensing. The plurality of reference signals generated based on the multi-channel sequence may also be referred to as a multi-channel reference signal. When sending a two-channel sequence, the sending apparatus further sends the second reference signal. It may be understood that, when a quantity of channels in the multi-channel sequence is another value, the sending apparatus further sends another reference signal.

The following uses two channels as an example to describe the multi-channel sequence in detail, that is, the quantity K of channels is 2, where the first reference signal corresponds a 1^{st} channel, and the second reference signal below corresponds to a 2^{nd} channel.

In a possible implementation, the multi-channel reference signal is obtained based on the first sequence and the second sequence. It may be understood that the first sequence and the second sequence are a multi-channel sequence. In other words, the first sequence is a sequence corresponding to a 1^{st} channel in the multi-channel sequence, and is used to obtain the first reference signal; and the second sequence is a sequence corresponding to a 2^{nd} channel in the multi-channel sequence, and is used to obtain the second reference signal.

It may be understood that the second sequence set is similar to the first sequence set, and a method for generating the second reference signal is similar to that for generating the first reference signal. For details, refer to the related descriptions of the first sequence set and the first reference signal. Details are not described again.

It may be understood that the quantity K of channels in the multi-channel sequence may be an integer, for example, 2, 3, 4, 8, or 16. This is not limited. For implementation of signals with a larger quantity of channels, refer to an implementation method of two-channel signals. For example, a third channel may correspond to a third sequence set, and the third sequence set is similar to the second sequence set. Details are not described again.

It may be understood that the first sequence set and the second sequence set may also be referred to as a multi-channel sequence set, and a 1^{st} sequence in the first sequence set and a second sequence corresponding to the first sequence in the second sequence set are referred to as a multi-channel sequence in the multi-channel sequence set.

It may be understood that, when a long multi-channel reference signal is generated based on the multi-channel sequence according to the foregoing method, a relationship between different channels of an original multi-channel sequence cannot be destroyed, to implement a low cross-correlation between two multi-channel reference signals.

For example, two multi-channel reference signals are used as an example for description. Each multi-channel reference signal includes two reference signals, and each of the two reference signals corresponds to one channel. For example, a 1^{st} multi-channel reference signal includes a first reference signal and a second reference signal, the first reference signal corresponds to a 1^{st} channel, and the second reference signal corresponds to a 2^{nd} channel. Similarly, a 2^{nd} multi-channel reference signal includes a fourth reference signal and a fifth reference signal, the fourth reference signal corresponds to a 1^{st} channel, and the fifth reference signal corresponds to a 2^{nd} channel. However, the 1^{st} channel corresponding to the first reference signal is different from the 1^{st} channel corresponding to the fourth reference signal, and the 2^{nd} channel corresponding to the second reference signal is different from the 2^{nd} channel corresponding to the fifth reference signal. The difference herein means that the two different multi-channel reference signals are respectively generated based on two different multi-channel sequences. Therefore, the 1^{st} channel corresponding to the first reference signal and the 1^{st} channel corresponding to the fourth reference signal are 1^{st} channels from different multi-channel sequences, and the 1^{st} channel corresponding to the second reference signal and the 2^{nd} channel corresponding to the fifth reference signal are 2^{nd} channels from different multi-channel sequences. The first reference signal may be obtained based on a first sequence ${X}_{0}^{{n}_{0}}$ and a first cyclic shift list corresponding to ${X}_{0}^{{n}_{0}}$, the second reference signal may be obtained based on a second sequence ${X}_{1}^{{n}_{0}}$ and a second cyclic shift list corresponding to ${X}_{1}^{{n}_{0}}$, the fourth reference signal may be obtained based on a first sequence ${X}_{0}^{{n}_{1}}$ and a first cyclic shift list corresponding to ${X}_{0}^{{n}_{1}}$, and the fifth reference signal may be obtained based on a second sequence ${X}_{1}^{{n}_{1}}$ and a second cyclic shift list corresponding to ${X}_{1}^{{n}_{1}}$, where ${X}_{0}^{{n}_{0}}$ and ${X}_{1}^{{n}_{0}}$ are a multi-channel sequence, and ${X}_{0}^{{n}_{1}}$ and ${X}_{1}^{{n}_{1}}$ are another multi-channel sequence. A cross-correlation result of the two multi-channel reference signals is obtained by superposing a cross-correlation result of the first reference signal and the fourth reference signal and a cross-correlation result of the second reference signal and the fifth reference signal. Specifically, according to the formula (4), a cross-correlation result of the first sequences ${X}_{0}^{{n}_{0}}$ and ${X}_{0}^{{n}_{1}}$ may be represented as ***c***₀ = [*c*_{0,0}, *c*_{1,0}, *c*_{2,0}, ... , *c*_{*L-*1,0}] , and a cross-correlation result of the second sequences ${X}_{1}^{{n}_{0}}$ and ${X}_{1}^{{n}_{1}}$ may be represented as ***c***₁ = [*c*_{0,1}, *c*_{1,1}, *c*_{2,1}, ... , *c*_{*L-*1,1}]. It should be understood that a cross-correlation of the two multi-channel sequences may be represented as ***c**ₐₗₗ* = [*c*_{0,}*ₐₗₗ, c*₁*_{,all}, c*₂*_{,all}, ... , c*_{*L-*1,*all*}] = ***c***₀ + ***c***₁. Still using an example in which the length of the reference signal is 2L for description, the first cyclic shift list corresponding to ${X}_{0}^{{n}_{0}}$ is $\left[0, \frac{{τ}_{a , 0}}{L}\right]$, the second cyclic shift list corresponding to ${X}_{1}^{{n}_{0}}$ is $\left[0, \frac{{τ}_{a , 1}}{L}\right]$, the first cyclic shift list corresponding to ${X}_{0}^{{n}_{1}}$ is $\left[0, \frac{{τ}_{b , 0}}{L}\right]$, and the second cyclic shift list corresponding to ${X}_{1}^{{n}_{1}}$ is $\left[0, \frac{{τ}_{b , 1}}{L}\right]$. In this case, a cross-correlation ***c̃***₀ = [*c̃*_{0,0}*, c̃*_{1,0}, ... , *c̃*_{2*L*-1,0}] between the first reference signal and the fourth reference signal satisfies ${{c}^{˜}}_{2 l - 1 , 0} = \frac{{c}_{l , 0} + {c}_{\left(l+Δ{τ}_{0}\right) %L , 0}}{2}$, where Δ*τ*₀ = *τ*_{*b,*0} - *τ*_{*a*,0}; and a cross-correlation ***c̃***₁ = [*c̃*_{0,1}, *c̃*_{1,1}, ... , *c̃*_{2*L*-1,1}] between the second reference signal and the fifth reference signal satisfies ${{c}^{˜}}_{2 l - 1 , 1} = \frac{{c}_{l , 1} + {c}_{\left(l+Δ{τ}_{1}\right) %L , 1}}{2}$, where Δ*τ*₁ = *τ*_{*b,*1} - *τ*_{*a,*1}*.* When Δ*τ*₁ = Δ*τ*₀ = Δ*τ*, the cross-correlation result ***c̃****ₐₗₗ* = [*c̃*_{0,}*ₐₗₗ, c̃*₁*_{,all},* ... , *c̃*_{2*L-*1,*all*}] = ***c̃***₀ + ***c̃***₁ of the multi-channel reference signals can satisfy ${{c}^{˜}}_{2 l - 1 , all} = \frac{{c}_{l , all} + {c}_{\left(l+Δτ\right) %L , all}}{2}$. By further ensuring Δ*τ* ≠ 0, a cross-correlation between two multi-channel signals may be further reduced compared with a cross-correlation between two multi-channel sequences. Herein, reference may be made to the related descriptions of the reference formula (4), and details are not described again.

Through the foregoing analysis, it may be understood that it needs to be ensured that a difference between the first cyclic shift list corresponding to ${X}_{0}^{{n}_{1}}$ and the first cyclic shift list corresponding to ${X}_{0}^{{n}_{0}}$ is the same as a difference between the second cyclic shift list corresponding to ${X}_{1}^{{n}_{1}}$ and the second cyclic shift list corresponding to ${X}_{1}^{{n}_{0}}$. Specifically, for a method for determining a cyclic shift of the multi-channel reference signal, refer to the following implementations.

In a possible implementation, in a multi-channel sequence, a first cyclic shift list corresponding to a first channel is the same as a second cyclic shift list corresponding to a second channel, that is, an r^{th} first cyclic shift in R first cyclic shifts is equal to an r^{th} second cyclic shift in R second cyclic shifts, where r is any integer greater than 0 and less than or equal to R.

For example, using a two-channel sequence as an example, a first cyclic shift list corresponding to a first sequence ${X}_{0}^{{n}_{0}}$ is [*a*₀*, a*₁*,* ..., *a*_{*R-*1}], a second cyclic shift list corresponding to a second sequence ${X}_{1}^{{n}_{0}}$ corresponding to the first sequence ${X}_{0}^{{n}_{0}}$ may also be [*a*₀*, a*₁*, ..., a*_{*R*-1}], a first cyclic shift list corresponding to another first sequence ${X}_{0}^{{n}_{1}}$ is [*b*₀, *b*₁*,* ..., *b*_{*R*-1}], and a second cyclic shift list corresponding to a second sequence ${X}_{1}^{{n}_{1}}$ corresponding to the first sequence ${X}_{0}^{{n}_{1}}$ may also be [*b*₀, *b*₁, ..., *b*_{*R-*1}].

In another possible implementation, in a multi-channel sequence, in R first cyclic shifts included in a first cyclic shift list corresponding to a first channel and R second cyclic shifts included in a second cyclic shift list corresponding to a second channel, a difference between an r^{th} first cyclic shift and an r^{th} second cyclic shift may be a first difference, and the first difference does not change with the sequence, where r is any integer greater than 0 and less than or equal to R. Specifically, the *r*^{th} first cyclic shift and the *r*^{th} second cyclic shift may satisfy the following relationship: ${a}_{r , 1} = {a}_{r , 0} + γ$ (10)

*a*_{*r*,0} indicates the r^{th} first cyclic shift in the first cyclic shift list corresponding to the first channel, and *a*_{*r*,1} indicates the *r*^{th} second cyclic shift in the second cyclic shift list corresponding to the second channel.

For example, using a two-channel sequence as an example, a first cyclic shift list corresponding to a first sequence ${X}_{0}^{{n}_{0}}$ is [*a*₀*, a*₁*,* ..., *a*_{*R-*1}], a second cyclic shift list corresponding to a second sequence ${X}_{1}^{{n}_{0}}$ corresponding to the first sequence ${X}_{0}^{{n}_{0}}$ may be [*a*₀ + *γ*, *a*₁ *+ γ, ... , a*_{*R-*1} *+ γ*], a first cyclic shift list corresponding to another first sequence ${X}_{0}^{{n}_{1}}$ is [*b*₀, *b*₁*,* ... , *b*_{*R-*1}], and a second cyclic shift list corresponding to a second sequence ${X}_{1}^{{n}_{1}}$ corresponding to the first sequence ${X}_{0}^{{n}_{1}}$ may be [*b*₀ *+ γ*, *b*₁ *+ γ*, *..., b*_{*R-*1} *+ γ*].

In another possible implementation, the first difference may satisfy the following relationship, and k indicates a channel index, that is, a cyclic shift may increase linearly with a step *S* channel by channel: $γ = kS$ (11)

For example, a quantity of channels is 3, a first cyclic shift list corresponding to a first sequence ${X}_{0}^{{n}_{0}}$ is [*a*₀*, a*₁*,* ... , *a*_{*R*-1}], a second cyclic shift list corresponding to a second sequence ${X}_{1}^{{n}_{0}}$ corresponding to the first sequence ${X}_{0}^{{n}_{0}}$ may be [*a*₀ *+ S, a*₁ *+ S, ..., a*_{*R-*1} *+ S*], a third cyclic shift list corresponding to a third sequence ${X}_{2}^{{n}_{0}}$ corresponding to the first sequence ${X}_{0}^{{n}_{0}}$ and the second sequence ${X}_{1}^{{n}_{0}}$ may be [*a*₀ *+* 2*S, a*₁ *+* 2*S, ..., a*_{*R*-1} *+* 2*S*], a first cyclic shift list corresponding to another first sequence ${X}_{0}^{{n}_{1}}$ is [*b*₀, *b*₁*, ... , b*_{*R-*1}], a second cyclic shift list corresponding to a second sequence ${X}_{1}^{{n}_{1}}$ corresponding to the first sequence ${X}_{0}^{{n}_{1}}$ may be [*b*₀ *+ S, b*₁ *+ S, ... , b*_{*R*-1} *+ S*], and a third cyclic shift list corresponding to a third sequence ${X}_{2}^{{n}_{1}}$ corresponding to the first sequence ${X}_{0}^{{n}_{1}}$ and the second sequence ${X}_{1}^{{n}_{1}}$ may be [*b*₀ *+* 2*S, b*₁ *+* 2*S, ... , b*_{*R*-1} *+* 2*S*].

The first difference may be pre-defined in a protocol, or pre-configured, or configured by the network device by using a broadcast message.

It may be understood that, in a process of generating the reference signal, truncation or simple extension of a sequence may be involved (for example, extending a sequence to one time or two times its original length). To preserve a relationship between original multi-channel sequences, it needs to be ensured that a same truncation or extension operation is performed on all channels of different sequences.

It may be understood that before sending the second reference signal, the sending apparatus further needs to determine the second sequence and the second cyclic shift list; and the first sequence and the second sequence are associated. Therefore, the first cyclic shift list and the second cyclic shift list may also be associated. Herein, reference may be made to the process of obtaining the first sequence and the first cyclic shift list, and details are not described again.

Optionally, a time domain resource for sending the first reference signal is different from a time domain resource for sending the second reference signal. It should be understood that since reference signals of different channels require independent correlation processing so that the reference signals of the different channels do not interfere with each other, the reference signals of the different channels may be transmitted on different time domain resources. Each of the different time domain resources may correspond to one or more time units. When the quantity of channels is greater than or equal to 3, the different time domain resources may be distributed at an equal interval. For example, one time unit may be one symbol or one slot.

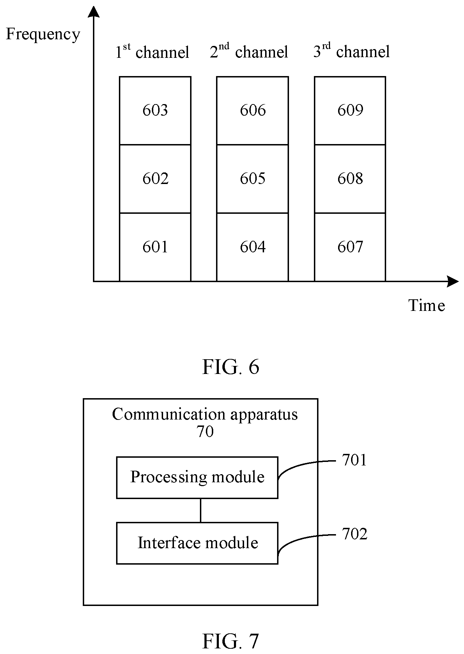

Specifically, using K=3 as an example, FIG. 6 is a diagram of a time-frequency resource of a three-channel reference signal. For a reference signal of each channel, a length P of the reference signal is 3L, each channel corresponds to one reference signal, and a length R of a cyclic shift list corresponding to each reference signal is 3. Each reference signal may be divided into three segments of short sequences, and a length of each segment of the short sequence is L. Three reference signals may be divided into nine segments of short sequences, and the nine segments of the short sequences respectively occupy a time-frequency resource 601 to a time-frequency resource 609. A reference signal (for example, the first reference signal) transmitted on a 1^{st} channel occupies the time-frequency resource 601 to the time-frequency resource 603, a reference signal (for example, the second reference signal) transmitted on a 2^{nd} channel occupies the time-frequency resource 604 to the time-frequency resource 606, and a reference signal (for example, the fourth reference signal) transmitted on a 3^{rd} channel occupies the time-frequency resource 607 to the time-frequency resource 609.

Specifically, for the 1^{st} channel, using an example in which a first sequence corresponding to a first reference signal transmitted on the channel is $\left\{{X}_{0}^{{n}_{0}}, {X}_{1}^{{n}_{0}}, {X}_{2}^{{n}_{0}}\right\}$ and a first cyclic shift list corresponding to the first reference signal is $\left\{{φ}_{0 , 0}^{{n}_{0}}, {φ}_{1 , 0}^{{n}_{0}}, {φ}_{2 , 0}^{{n}_{0}}\right\}$, as described above, the first reference signal may be divided into three segments of short sequences respectively occupying a time-frequency resource 601 to a time-frequency resource 603. If a cyclic shift corresponding to a first segment of a short sequence is ${φ}_{0 , 0}^{{n}_{0}}$, the first segment of the short sequence may be denoted as ${X}_{0}^{{n}_{0}} \left({φ}_{0 , 0}^{{n}_{0}}\right)$. A 1^{st} 0 in a subscript of ${φ}_{0 , 0}^{{n}_{0}}$ is a sequence index in a channel. That is, the segment of the short sequence is a specific order of the short sequence in the reference signal. For example, a sequence index of a short sequence corresponding to the time-frequency resource 601 is 0, a sequence index of a short sequence corresponding to the time-frequency resource 602 is 1, and a sequence index of a short sequence corresponding to the time-frequency resource 603 is 2. A 2^{nd} 0 of the subscript in ${φ}_{0 , 0}^{{n}_{0}}$ is a channel index. The first segment of the short sequence may be represented as $\left\{{X}_{0}^{{n}_{0}}{e}^{j 2 {πφ}_{0 , 0}^{{n}_{0}} ⋅ 0},{X}_{1}^{{n}_{0}}{e}^{j 2 {πφ}_{0 , 0}^{{n}_{0}} ⋅ 1},{X}_{1}^{{n}_{0}}{e}^{j 2 {πφ}_{0 , 0}^{{n}_{0}} ⋅ 2}\right\}$ in frequency domain; a cyclic shift corresponding to a second segment of a short sequence is ${φ}_{1 , 0}^{{n}_{0}}$, and may be denoted as ${X}_{0}^{{n}_{0}} \left({φ}_{1 , 0}^{{n}_{0}}\right)$, and may be represented as $\left\{{X}_{0}^{{n}_{0}}{e}^{j 2 {πφ}_{1 , 0}^{{n}_{0}} ⋅ 0},{X}_{1}^{{n}_{0}}{e}^{j 2 {πφ}_{1 , 0}^{{n}_{0}} ⋅ 1},{X}_{2}^{{n}_{0}}{e}^{j 2 {πφ}_{1 , 0}^{{n}_{0}} ⋅ 2}\right\}$ in frequency domain; and a cyclic shift corresponding to a third segment of a short sequence is ${φ}_{2 , 0}^{{n}_{0}}$, may be denoted as ${X}_{0}^{{n}_{0}} \left({φ}_{2 , 0}^{{n}_{0}}\right)$, and may be represented as $\left\{{X}_{0}^{{n}_{0}}{e}^{j 2 {πφ}_{2 , 0}^{{n}_{0}} ⋅ 0},{X}_{1}^{{n}_{0}}{e}^{j 2 {πφ}_{2 , 0}^{{n}_{0}} ⋅ 1},{X}_{2}^{{n}_{0}}{e}^{j 2 {πφ}_{2 , 0}^{{n}_{0}} ⋅ 2}\right\}$ in frequency domain. The same rule applies to other channels, and details are not described again.

For example, using two two-channel sequences whose length is 8 as an example, a cyclic shift list corresponding to the two-channel sequences is shown in Table 1. Both the first sequence and the second sequence shown in Table 1 are frequency domain expression forms. It can be learned that the sequence shown in Table 1 is a frequency-domain constant-modulus sequence, that is, all elements in the sequence have a same modulus (all are 1), and phases of different elements in the sequence are different. A result shown in Table 1 is a result obtained by rounding phases of elements in the sequence to two decimal places. It can be learned through calculation that a peak sidelobe level of a cross-correlation between a 1^{st} multi-channel sequence (corresponding to a sequence index 0) and a 2^{nd} multi-channel sequence (corresponding to a sequence index 1) is approximately -13 dB. According to the manner of generating the reference signal shown in the formula (5), two multi-channel reference signals whose length is 32 may be generated based on two multi-channel sequences and a cyclic shift list corresponding to the two multi-channel sequences, and a level of a cross-correlation peak sidelobe between the two multi-channel reference signals is approximately -16.8 dB. The smaller a cross-correlation peak sidelobe level, the better. Therefore, it can be learned that a cross-correlation of the multi-channel sequence is improved by about 3.8 dB compared with that of an original sequence.

**Table 1**

| Sequence Index | First channel | | Second channel | |
|---|---|---|---|---|
| | First sequence | First cyclic shift list | Second sequence | Second cyclic shift list |
| 0 | [*e*^{*j*4.16}, *e*^{*j*3.75}, *e*^{*j*1.49}, *e*^{*j*3.93}, *e*^{*j*1.73}, *e*^{*j*5.77}, *e*^{*j*0.4}, *e*^{*j*1.72}] | [0,1/8,2/8, 3/8] | [*e*^{*j*4.29}, *e*^{*j*1.97}, *e*^{*j*5.42}, *e*^{*j*0.63}, *e*^{*j*5.75}, *e*^{*j*4.8}, *e*^{*j*1}, *e*^{*j*1.94}] | [0,2/8,4/8, 6/8] |
| 1 | [*e*^{*j*3.55}, *e*^{*j*4.56}, *e*^{*j*4.2}, *e*^{*j*0.67}, *e*^{*j*2.98}, *e*^{*j*2.58}, *e*^{*j*0.17}, *e*^{*j*2.18}] | [0,1/8,2/8, 3/8] | [*e*^{*j*5.34}, *e*^{*j*0.23}, *e*^{*j*5.6}, *e*^{*j*6.04}, *e*^{*j*1.38}, *e*^{*j*5.76}, *e*^{*j*6.07}, *e*^{*j*5.95}] | [0,2/8,4/8, 6/8] |

The foregoing mainly describes the solutions provided in this application from a perspective of interaction between the sending apparatus and the receiving apparatus. Correspondingly, this application further provides a communication apparatus. The communication apparatus may be the sending apparatus in the foregoing method embodiment, or an apparatus including the sending apparatus, or a component that can be used in the sending apparatus. Alternatively, the communication apparatus may be the receiving apparatus in the foregoing method embodiment, or an apparatus including the receiving apparatus, or a component that can be used in the receiving apparatus. It may be understood that, to implement the foregoing functions, the sending apparatus, the receiving apparatus, or the like includes a corresponding hardware structure and/or software module for performing each function. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the sending apparatus or the receiving apparatus may be divided into functional modules based on the foregoing method examples. For example, functional modules corresponding to various functions are obtained through division, or two or more functions may be integrated into one processing module. The integrated module may be implemented in a form of hardware, or may be implemented in a form of a software functional module. It may be understood that division into the modules in this application is an example, and is merely logical function division. During actual implementation, there may be another division manner.

For example, when the functional modules are obtained through division in an integrated manner, FIG. 7 is a diagram of a structure of communication apparatus 70. The communication apparatus 70 includes a processing module 701 and an interface module 702. The processing module 701 may also be referred to as a processing unit, and is configured to perform an operation other than receiving and sending operations. For example, the processing module 701 may be a processing circuit or a processor. The interface module 702 may also be referred to as an interface unit, and is configured to perform receiving and sending operations. For example, the interface module 702 may be an interface circuit, a transceiver machine, a transceiver, or a communication interface.

In some embodiments, the communication apparatus 70 may further include a storage module (not shown in FIG. 7), configured to store program instructions and data.

For example, the communication apparatus 70 is configured to implement a function of a sending apparatus or a receiving apparatus. The communication apparatus 70 is, for example, the sending apparatus in the embodiment shown in FIG. 3 or the embodiment shown in FIG. 5.

The processing module 701 is configured to determine a first reference signal. The first reference signal is obtained based on a first sequence and a first cyclic shift list; the first reference signal includes P elements; the first sequence is one sequence in a plurality of first sequences included in a first sequence set; the first sequence includes L elements; any first sequence in the first sequence set has a corresponding first cyclic shift list, and different first sequences correspond to different first cyclic shift lists; the first cyclic shift list includes R first cyclic shifts; and R is equal to an integer obtained by rounding P divided by L, and L, R, and P are all integers greater than or equal to 2. For example, the processing module 701 may be configured to perform S301.

The interface module 702 is configured to send the first reference signal. For example, the interface module 702 may be configured to perform S302.

In a possible implementation, the interface module 702 is further configured to send a second reference signal. The second reference signal is determined based on a second sequence and a second cyclic shift list; the second reference signal includes P elements; the second sequence is a sequence corresponding to the first sequence; the second sequence is one sequence in a plurality of second sequences included in a second sequence set, and the second sequence includes L elements; any second sequence in the second sequence set has a corresponding second cyclic shift list, and different second sequences correspond to different second cyclic shift lists; the second cyclic shift list includes R second cyclic shifts; and the first sequence set is associated with the second sequence set, and each first sequence in the first sequence set has a corresponding second sequence in the second sequence set.

In a possible implementation, the second cyclic shift list is the same as the first cyclic shift list.

In a possible implementation, any two first sequences in the first sequence set have a corresponding first cyclic shift difference list; the first cyclic shift difference list includes a plurality of first cyclic shift differences; any two differences in the plurality of first cyclic shift differences are different; and the first cyclic shift difference is a difference between first cyclic shifts corresponding to the two first sequences.

In a possible implementation, when R is greater than or equal to 3, in the R first cyclic shifts included in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

In a possible implementation, in the R first cyclic shifts included in the first cyclic shift list, a 1^{st} cyclic shift is equal to 0, an n^{th} first cyclic shift is n-1 times a 2^{nd} first cyclic shift, and n is any integer greater than 1 and less than or equal to R.

In a possible implementation, in the R first cyclic shifts included in the first cyclic shift list, an m^{th} first cyclic shift is m times a 1^{st} first cyclic shift, and m is any integer greater than 0 and less than or equal to R.

In a possible implementation, the first cyclic shift is a quotient of a first offset and a first length; the first length is L, R times L, or P; and the first offset is an integer less than the first length.

In a possible implementation, any two first cyclic shifts in the first cyclic shift list are different.

In a possible implementation, a time domain resource for sending the first reference signal is different from a time domain resource for sending the second reference signal.

In a possible implementation, the interface module 702 is further configured to receive first information, where the first information indicates an index of the first sequence; and the processing module 701 is further configured to determine the first sequence and the first cyclic shift list based on the first information.

In a possible implementation, the first cyclic shift list satisfies a first condition, the first condition includes that a cross-correlation between the first reference signal and a third reference signal is less than a first threshold, the third reference signal is obtained based on one first sequence in the first sequence set and a first cyclic shift list corresponding to the first sequence, and a first sequence used to determine the first reference signal is different from a first sequence used to determine the third reference signal.

In a possible implementation, a (*p +* 1)^{th} element of the first reference signal is *sₚ*, and p is an integer greater than or equal to 0 and less than P; and *sₚ* = *xᵤ* × e^{j2π*αvu*}, where *xᵤ* is a (*u +* 1)^{th} element of the first sequence, *u* = *p* mod L, *αᵥ* is a (*v +* 1)^{th} first cyclic shift of the first cyclic shift list, and $v = \left⌊p/L\right⌋$.

In a possible implementation, the first reference signal is used for sensing.

In a possible implementation, the first sequence and the second sequence are a multi-channel sequence.

When the communication apparatus 70 is configured to implement the function of the sending apparatus, for another function that can be implemented by the communication apparatus 70, reference may be made to the related descriptions of the embodiment shown in FIG. 3 or the embodiment shown in FIG. 5. Details are not described again.

Alternatively, for example, the communication apparatus 70 is configured to implement the function of the receiving apparatus. The communication apparatus 10 is, for example, the receiving apparatus in the embodiment shown in FIG. 5.

The interface module 702 is configured to receive a first reference signal. The first reference signal is obtained based on a first sequence and a first cyclic shift list; the first reference signal includes P elements; the first sequence is one sequence in a plurality of first sequences included in a first sequence set; the first sequence includes L elements; any first sequence in the first sequence set has a corresponding first cyclic shift list, and different first sequences correspond to different first cyclic shift lists; the first cyclic shift list includes R first cyclic shifts; and R is equal to an integer obtained by rounding P divided by L, and L, R, and P are all integers greater than or equal to 2.

In a possible implementation, the interface module 702 is further configured to receive a second reference signal. The second reference signal is determined based on a second sequence and a second cyclic shift list; the second reference signal includes P elements; the second sequence is a sequence corresponding to the first sequence; the second sequence is one sequence in a plurality of second sequences included in a second sequence set, and the second sequence includes L elements; any second sequence in the second sequence set has a corresponding second cyclic shift list, and different second sequences correspond to different second cyclic shift lists; the second cyclic shift list includes R second cyclic shifts; and the first sequence set is associated with the second sequence set, and each first sequence in the first sequence set has a corresponding second sequence in the second sequence set.

In a possible implementation, the second cyclic shift list is the same as the first cyclic shift list.

In a possible implementation, any two first sequences in the first sequence set have a corresponding first cyclic shift difference list; the first cyclic shift difference list includes a plurality of first cyclic shift differences; any two differences in the plurality of first cyclic shift differences are different; and the first cyclic shift difference is a difference between first cyclic shifts corresponding to the two first sequences.

In a possible implementation, when R is greater than or equal to 3, in the R first cyclic shifts included in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

In a possible implementation, in the R first cyclic shifts included in the first cyclic shift list, a 1^{st} cyclic shift is equal to 0, an n^{th} first cyclic shift is n-1 times a 2^{nd} first cyclic shift, and n is any integer greater than 1 and less than or equal to R.

In a possible implementation, in the R first cyclic shifts included in the first cyclic shift list, an m^{th} first cyclic shift is m times a 1^{st} first cyclic shift, and m is any integer greater than 0 and less than or equal to R.

In a possible implementation, any two first cyclic shifts in the first cyclic shift list are different.

In a possible implementation, the interface module 702 is further configured to send first information, where the first information indicates an index of the first sequence.

In a possible implementation, a (*p +* 1)^{th} element of the first reference signal is *sₚ*, and p is an integer greater than or equal to 0 and less than P; and *sₚ* = *xᵤ* × e^{j2π*αvu*}, where *xᵤ* is a (*u +* 1)^{th} element of the first sequence, *u* = *p* mod L, *αᵥ* is a (*v +* 1)^{th} first cyclic shift of the first cyclic shift list, and $v = \left⌊p/L\right⌋$.

When the communication apparatus 70 is configured to implement the function of the receiving apparatus, for another function that can be implemented by the communication apparatus 70, reference may be made to the related descriptions of the embodiment shown in FIG. 5. Details are not described again.

In a simple embodiment, a person skilled in the art may figure out that the communication apparatus 70 may be in the form shown in FIG. 2. For example, the processor 201 in FIG. 2 may invoke the computer-executable instructions stored in the memory 203, to cause the communication apparatus 70 to perform the method in the foregoing embodiment.

For example, functions/implementation processes of the processing module 701 and the interface module 702 in FIG. 7 may be implemented by the processor 201 in FIG. 2 by invoking the computer-executable instructions stored in the memory 203. Alternatively, functions/implementation processes of the processing module 701 in FIG. 7 may be implemented by the processor 201 in FIG. 2 by invoking the computer-executable instructions stored in the memory 203, and functions/implementation processes of the interface module 702 in FIG. 7 may be implemented by the communication interface 204 in FIG. 2.

It may be understood that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedure. The processor may be built into an SoC (system on chip) or an ASIC, or may be an independent semiconductor chip. In addition to a core configured to execute software instructions to perform an operation or processing, the processor may further include a necessary hardware accelerator, for example, a field programmable gate array (field programmable gate array, FPGA), a PLD (programmable logic device), or a logic circuit that implements a dedicated logic operation.

When the foregoing module or unit is implemented by hardware, the hardware may be any one or any combination of a CPU, a microprocessor, a digital signal processing (digital signal processing, DSP) chip, a microcontroller unit (microcontroller unit, MCU), an artificial intelligence processor, an ASIC, an SoC, an FPGA, a PLD, a dedicated digital circuit, a hardware accelerator, or a non-integrated discrete device. The hardware can run necessary software or perform the foregoing method procedure without depending on software.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes the memory. Optionally, the chip system may include a chip, or may include a chip and another discrete device. This is not specifically limited in this application.

Optionally, this application further provides a computer-readable storage medium. All or a part of procedures in the foregoing method embodiments may be completed by a computer program instructing related hardware. The program may be stored in the computer-readable storage medium. When the program is executed, the procedures in the foregoing method embodiments may be implemented. The computer-readable storage medium may be an internal storage unit of the communication apparatus in any one of the foregoing embodiments, for example, a hard disk or a memory of the communication apparatus. Alternatively, the computer-readable storage medium may be an external storage device of the communication apparatus, for example, a plug-in hard disk, a smart media card (smart media card, SMC), a secure digital (secure digital, SD) card, or a flash card (flash card) that is equipped on the communication apparatus. Further, the computer-readable storage medium may include both an internal storage unit and an external storage device of the communication apparatus. The computer-readable storage medium is configured to store the computer program and store another program and data that are required by the communication apparatus. The computer-readable storage medium may be further configured to temporarily store data that has been output or is to be output.

Optionally, this application further provides a computer program product. All or a part of procedures in the foregoing method embodiments may be completed by a computer program instructing related hardware. The program may be stored in the computer program product. When the program is executed, the procedures in the foregoing method embodiments may be implemented.

Optionally, this application further provides computer instructions. All or a part of procedures in the foregoing method embodiments may be completed by the computer instructions instructing related hardware (for example, a computer, a processor, or a sensing apparatus). The program may be stored in the computer-readable storage medium or the computer program product.

Optionally, this application further provides a communication system, including the sending apparatus and the receiving apparatus in the foregoing embodiments.

Based on descriptions of the foregoing implementations, a person skilled in the art may clearly understand that, for the purpose of convenient and brief descriptions, division into the foregoing functional modules is merely used as an example for descriptions. During actual application, the functions may be allocated to different functional modules for implementation based on a requirement. In other words, an inner structure of an apparatus is divided into different functional modules to implement all or a part of the functions described above.

In the several embodiments provided in this application, it should be understood that the disclosed apparatus and method may be implemented in other manners. For example, the described apparatus embodiments are merely examples. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. A part of or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A signal transmission method, wherein the method comprises:
determining a first reference signal, wherein the first reference signal is obtained based on a first sequence and a first cyclic shift list; the first reference signal comprises P elements; the first sequence is one sequence in a plurality of first sequences comprised in a first sequence set; the first sequence comprises L elements; any first sequence in the first sequence set has a corresponding first cyclic shift list, and different first sequences correspond to different first cyclic shift lists; the first cyclic shift list comprises R first cyclic shifts; and R is equal to an integer obtained by rounding P divided by L, and L, R, and P are all integers greater than or equal to 2; and
sending the first reference signal.

2. The method according to claim 1, wherein the method further comprises:
sending a second reference signal, wherein the second reference signal is determined based on a second sequence and a second cyclic shift list; the second reference signal comprises P elements; the second sequence is a sequence corresponding to the first sequence; the second sequence is one sequence in a plurality of second sequences comprised in a second sequence set, and the second sequence comprises L elements; any second sequence in the second sequence set has a corresponding second cyclic shift list, and different second sequences correspond to different second cyclic shift lists; the second cyclic shift list comprises R second cyclic shifts; and the first sequence set is associated with the second sequence set, and each first sequence in the first sequence set has a corresponding second sequence in the second sequence set.

3. The method according to claim 2, wherein the second cyclic shift list is the same as the first cyclic shift list.

4. The method according to any one of claims 1 to 3, wherein any two first sequences in the first sequence set have a corresponding first cyclic shift difference list; the first cyclic shift difference list comprises a plurality of first cyclic shift differences; any two differences in the plurality of first cyclic shift differences are different; and the first cyclic shift difference is a difference between first cyclic shifts corresponding to the two first sequences.

5. The method according to any one of claims 1 to 4, wherein when R is greater than or equal to 3, in the R first cyclic shifts comprised in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

6. The method according to any one of claims 1 to 4, wherein in the R first cyclic shifts comprised in the first cyclic shift list, a 1^{st} cyclic shift is equal to 0, an n^{th} first cyclic shift is n-1 times a 2^{nd} first cyclic shift, and n is any integer greater than 1 and less than or equal to R.

7. The method according to any one of claims 1 to 4, wherein in the R first cyclic shifts comprised in the first cyclic shift list, an m^{th} first cyclic shift is m times a 1^{st} first cyclic shift, and m is any integer greater than 0 and less than or equal to R.

8. The method according to any one of claims 1 to 7, wherein the first cyclic shift is a quotient of a first offset and a first length; the first length is L, R times L, or P; and the first offset is an integer less than the first length.

9. The method according to any one of claims 1 to 8, wherein any two first cyclic shifts in the first cyclic shift list are different.

10. The method according to claim 2 or 3, wherein a time domain resource for sending the first reference signal is different from a time domain resource for sending the second reference signal.

11. The method according to any one of claims 1 to 10, wherein the method further comprises:
receiving first information, wherein the first information indicates an index of the first sequence; and
determining the first sequence and the first cyclic shift list based on the first information.

12. The method according to any one of claims 1 to 11, wherein
the first cyclic shift list satisfies a first condition, the first condition comprises that a cross-correlation between the first reference signal and a third reference signal is less than a first threshold, the third reference signal is obtained based on one first sequence in the first sequence set and a first cyclic shift list corresponding to the first sequence, and a first sequence used to determine the first reference signal is different from a first sequence used to determine the third reference signal.

13. The method according to any one of claims 1 to 12, wherein a (*p +* 1)^{th} element of the first reference signal is *sₚ*, and *p* is an integer greater than or equal to 0 and less than P; and *sₚ* = *xᵤ* × e^{j2π*αvu*}, wherein *xᵤ* is a (*u +* 1)^{th} element of the first sequence, *u* = *p* mod L, *αᵥ* is a (*v +* 1)^{th} first cyclic shift of the first cyclic shift list, and $v = \left⌊p/L\right⌋$.

14. The method according to any one of claims 1 to 13, wherein the first reference signal is used for sensing.

15. The method according to claim 2, 3, or 10, wherein the first sequence and the second sequence are a multi-channel sequence.

16. A signal transmission method, wherein the method comprises:
receiving a first reference signal, wherein the first reference signal is obtained based on a first sequence and a first cyclic shift list; the first reference signal comprises P elements; the first sequence is one sequence in a plurality of first sequences comprised in a first sequence set; the first sequence comprises L elements; any first sequence in the first sequence set has a corresponding first cyclic shift list, and different first sequences correspond to different first cyclic shift lists; the first cyclic shift list comprises R first cyclic shifts; and R is equal to an integer obtained by rounding P divided by L, and L, R, and P are all integers greater than or equal to 2.

17. The method according to claim 16, wherein the method further comprises:
receiving a second reference signal, wherein the second reference signal is determined based on a second sequence and a second cyclic shift list; the second reference signal comprises P elements; the second sequence is a sequence corresponding to the first sequence; the second sequence is one sequence in a plurality of second sequences comprised in a second sequence set, and the second sequence comprises L elements; any second sequence in the second sequence set has a corresponding second cyclic shift list, and different second sequences correspond to different second cyclic shift lists; the second cyclic shift list comprises R second cyclic shifts; and the first sequence set is associated with the second sequence set, and each first sequence in the first sequence set has a corresponding second sequence in the second sequence set.

18. The method according to claim 17, wherein the second cyclic shift list is the same as the first cyclic shift list.

19. The method according to any one of claims 16 to 18, wherein any two first sequences in the first sequence set have a corresponding first cyclic shift difference list; the first cyclic shift difference list comprises a plurality of first cyclic shift differences; any two differences in the plurality of first cyclic shift differences are different; and the first cyclic shift difference is a difference between first cyclic shifts corresponding to the two first sequences.

20. The method according to any one of claims 16 to 19, wherein when R is greater than or equal to 3, in the R first cyclic shifts comprised in the first cyclic shift list, a difference between an (i+1)^{th} first cyclic shift and an i^{th} first cyclic shift is equal to a difference between the i^{th} first cyclic shift and an (i-1)^{th} first cyclic shift; and i is any integer greater than 1 and less than R.

21. The method according to any one of claims 16 to 19, wherein in the R first cyclic shifts comprised in the first cyclic shift list, a 1^{st} cyclic shift is equal to 0, an n^{th} first cyclic shift is n-1 times a 2^{nd} first cyclic shift, and n is any integer greater than 1 and less than or equal to R.

22. The method according to any one of claims 16 to 19, wherein in the R first cyclic shifts comprised in the first cyclic shift list, an m^{th} first cyclic shift is m times a 1^{st} first cyclic shift, and m is any integer greater than 0 and less than or equal to R.

23. The method according to any one of claims 16 to 22, wherein any two first cyclic shifts in the first cyclic shift list are different.

24. The method according to any one of claims 16 to 23, wherein the method further comprises:
sending first information, wherein the first information indicates an index of the first sequence.

25. The method according to any one of claims 16 to 24, wherein a (*p*+1)^{th} element of the first reference signal is *sₚ*, and *p* is an integer greater than or equal to 0 and less than P; and *sₚ* = *xᵤ* × e^{j2π*αvu*}, wherein *xᵤ* is a (*u +* 1)^{th} element of the first sequence, *u* = *p* mod L, *αᵥ* is a (*v +* 1)^{th} first cyclic shift of the first cyclic shift list, and $v = \left⌊p/L\right⌋$.

26. A communication apparatus, comprising a unit or a module configured to perform the method according to any one of claims 1 to 15, or a unit or a module configured to perform the method according to any one of claims 16 to 25.

27. A communication apparatus, comprising a processor, wherein the processor is coupled to a memory, and the memory is configured to store a program or instructions; and when the program or the instructions are executed by the processor, the apparatus is caused to perform the method according to any one of claims 1 to 15 or the method according to any one of claims 16 to 25.

28. A computer-readable storage medium, wherein the computer-readable storage medium stores a computer program or instructions; and when the computer program or the instructions are executed, a computer is caused to perform the method according to any one of claims 1 to 15 or the method according to any one of claims 16 to 25.

29. A computer program product, wherein the computer program product comprises computer program code; and when the computer program code is run on a computer, the computer is caused to implement the method according to any one of claims 1 to 15 or implement the method according to any one of claims 16 to 25.

30. A communication system, comprising an apparatus configured to perform the method according to any one of claims 1 to 15, and/or an apparatus configured to perform the method according to any one of claims 16 to 25.
